# EUROPEAN PATENT SPECIFICATION

(11) **EP 1 332 958 B1**
(45) Date of publication and mention of the grant of the patent: **23.12.2009**
(21) Application number: 03000635.7
(22) Date of filing: 15.01.2003
(51) Int. Cl.: B62M 9/12, B62M 25/04

(54) **A speed change auxiliary device for bicycle transmission**
Steuerungseinrichtung für eine Fahrradgangschaltung
Dispositif auxiliaire de commande de changement de vitesse pour bicyclette

(30) Priority: 04.02.2002 JP 2002026588
(43) Date of publication of application: 06.08.2003
(73) Proprietor: Sakae Engineering Inc., Kashiwa-shi, Chiba 277-0832 (JP)
(72) Inventor: Iwasaki, Yoshihisa, Nara 637-0093 (JP); Nakamura, Fujio, Adachi-ku, Tokyo 120-0001 (JP)
(74) Representative: Reinhard - Skuhra - Weise & Partner GbR

(56) References cited:
- EP-A1- 0 558 425
- EP-A2- 0 482 559
- EP-A2- 0 834 685
- EP-A2- 1 106 496
- US-A- 6 142 899

## Description

### Background of the invention

### 1. Field of the invention

The present invention relates to a speed change auxiliary device for bicycles, in particular to a speed change auxiliary device for assisting the function of the derailleur for bicycles by utilizing the force produced with rotary parts provided on the bicycle.

### 2. Description of prior art

A type of bicycle has been well-known that has a set of front gears, an inner gear and an outer gear for example, each with the different number of sprockets, arranged laterally side by side. In the case the chain is to be replaced from one gear to the other of such a front gear set, the speed change mechanism operation wire is pulled by operating the shift lever connected to the front speed change mechanism through the speed change mechanism operation wire. As a result, the front speed change mechanism is shifted for example from the inner gear side to the outer gear side, so that the chain placed around the inner gear is replaced to the outer gear. On the other hand, when the speed change mechanism operation wire is loosened by operating the shift lever, the front speed change mechanism is pushed from the outer gear side back to the inner gear side with the force of the return spring provided for the front speed change mechanism, so that the chain girdling the outer gear is shifted onto around the inner gear. In that case, the chain is shifted smoothly and securely if the force of the return spring is large enough.

However, when the force of the return spring is large, a problem arises that the operation of shifting the chain from the inner gear to the outer gear is hard because the speed change mechanism operation wire must be pulled by operating the shift lever against the large force of the return spring. Incidentally, the front speed change mechanism attached to the bicycle will be described later.

One of the proposals for solving the above problem is made for example by JP2001-191974A. That proposal is an auxiliary device as shown in FIG. 17 for shifting the bicycle speed change mechanism made up of: a casing 100 attached to a bottom bracket which is a component of the bicycle frame, a cam member 101 attached rotatably to the casing 100, a cam follower 102 connected to a speed change mechanism (not shown) through a speed change mechanism operation wire 102a to slide over the peripheral surface of the cam member 101, couplings 105 each having a pawl member 105a to be movable between a restraining position on the radially inner side for restraining the inside round surface of the cam member 101 and the outside round surface of a rotary member 104 fixed to a crank arm of the bicycle to rotate together with the crank arm, a control member 106 for moving the pawl member 105a of each coupling 105 to the restraining position, and a releasing member for moving the pawl member 105a of each coupling 105 to the non-restraining position according to the rotation of the cam member 101.

To operate the speed change mechanism using the auxiliary device for shifting the bicycle speed change mechanism, a shift lever (not shown) connected to the control member 106 through the operation wire 106a is operated. As a result, the control member 106 moves against the spring 106b hooked on the control member 106, and the pawl member 105a of each coupling 105 moves to the restraining position to restrain the rotary member 104 and the cam member 101. As a result, the cam member 101 rotates together with the rotary member 104, and the cam follower 102 slides along the round surface of the cam member 101 from its large diameter portion to small diameter portion or from its small diameter portion to large diameter portion. As the cam follower 102 slides, the speed change mechanism operation wire 102a is pulled or loosened to operate the speed change mechanism.

However, the above arrangement has the following problems for example.

First, the cam member 101 must be fitted rotatably to the casing 100. Moreover, if the cam member 101 displaces radially relative to the casing 100 at the time of the fitting work, the cam follower 102 to slide along the round surface of the cam member 101 cannot make specified movement. Therefore, the cam member 101 must be fitted not to displace radially from the casing 100 but to rotate smoothly, which requires accuracy in the manufacture and results in the increase in the manufacturing cost.

Besides, the arrangement requires the coupling 105 having the pawl member 105a for restraining the rotary member 104 and the cam member 101, and the coupling 105 must be provided with the urging member 105b for urging the pawl member 105a radially inward. As a result, the number of components increases and the coupling 105 must be fitted to the cam member 101, which results in the increase in cost. Furthermore, the pawl member 105a must be made of a material that is hard to wear because the wear makes it impossible to restrain the cam member 101 and the rotary member 104. Moreover, since the pawl member 105a is located on the inside round surface side of the cam member 101, the pawl member 105a is subjected to a large shearing force in the state of the cam member 101 and the rotary member 104 being restrained. Therefore, the pawl member 105 must be made of a material having sufficient strength, which results in the increase in cost.

Furthermore, since the cam follower 102 is constantly pressed against the round surface of the cam member 101, the round surface of the cam member 101 is likely to wear away. Therefore, the cam member 101 must be made of a material that is hard to wear off. This also adds to the increase in cost.

Besides, it is preferable to design such that the chain is always placed around a specific one of plural gears with which the bicycle is the easiest to ride in the case the speed change mechanism becomes inoperative during a ride due to some trouble in the auxiliary device. With such an arrangement, however, for example in the case the control member 106 becomes inoperative through the operation wire 106a interconnecting the control member 106 and the shift lever because the operation wire 106a breaks or comes off the control member 106 during a ride, or in the case the outside round surface of the rotary member 104 and the inside round surface of the cam member 101 cannot be restrained because the pawl members 105a of the couplings 105 break or wear off, the cam follower 102 remains in the state of contacting either the small diameter portion or the large diameter portion of the cam member 101. Therefore, in such a case, it is uncertain whether the chain comes to be placed on the inner or outer gear. Therefore, the above arrangement cannot be designed such that the chain always comes to be placed around a specific gear for an easy ride in the event of the above trouble during a ride.

Besides, in the case of a trouble due to weakening in use or the like of the spring 106b of the control member 106, the rotary member 104 and the cam member 101 end up in the restrained state and cannot be brought to the non-restrained state. As a result, the cam member 101 rotates together with the rotary member 104 to rotate the cam follower 102, and operation of the speed change mechanism is repeated for an unlimited number of times. Therefore, the ride cannot be continued in the case of a trouble of the spring 106b of the control member 106 during the ride.

EP 1 106 496 A2 discloses an assisting apparatus that uses power from a rotating member to assist the operation of a bicycle transmission includes a mounting member; a cam member coupled to the mounting member for rotation around a cam axis, wherein the cam member has a cam surface; a cam follower cooperating with the cam surface for moving in response to rotation of the cam member; a transmission actuating element coupling member for communicating movement of the cam follower to a transmission actuating element; a first coupling member coupled for rotation of the cam member, wherein the first coupling member moves between a first engaged position and a first disengaged position; an operating member for moving the first coupling member to the first engaged position; and a decoupling member that moves the first coupling member to the first disengaged position in response to a rotational position of the cam member. The first coupling member selectively engages and disengages the rotating member so that the rotational force of the rotating member may be used to assist the shifting operation.

### Disclosure of the invention

The first object of the present invention is to provide a speed change auxiliary device for bicycles that can solve the above problems, by making it unnecessary to attach the cam member rotatably to the casing, making the couplings each having the pawl member unnecessary, reducing the number of components, and accordingly reducing the manufacturing cost.

The second object of the present invention is to provide a speed change auxiliary device for bicycles that can continue a ride even in the event of a trouble of the speed change auxiliary device for bicycles during the ride.

The third object of the present invention is to provide a speed change auxiliary device for bicycles that makes it possible to attach the front speed change mechanism in position to the bicycle with respect to up-and-down and right- and-left directions.

The speed change auxiliary device for bicycles according to the present invention is made up of : a cam member, a support member, a speed change mechanism operating member, and a control member.

The cam member has a cam surface fixed to a rotary member having a rotary shaft provided on the bicycle.

The support member is fixed to a bicycle frame.

The speed change mechanism operating member is connected for interlocked motion with a speed change mechanism provided on the bicycle, is supported to move along the cam surface of the cam member rotating together with the rotary member, and is provided with a cam contacting member movable with respect to the cam member over a range from a cam surface non-contactable position where a contact with the cam surface is impossible to a cam surface contactable position where a contact with the cam surface is possible.

The control member is for moving the cam contact member of the speed change mechanism operating member from the cam surface non-contactable position to the cam surface contactable position.

While the features of the present invention are broadly described above, the constitution and contents of the present invention together with its objects and individual features will become more apparent with the following disclosure in reference to the appended drawings.

### Brief description of the drawings

FIG. 1 is an explanatory drawing of an essential part of a bicycle provided with an auxiliary device, an embodiment of the present invention, for a bicycle speed change mechanism.
FIG. 2 is a right side view of an essential part, partially in section, of a bicycle provided with an auxiliary device, an embodiment of the present invention, for a bicycle speed change mechanism.
FIG. 3 is an explanatory sectional drawing taken along the line III-III in FIG. 2.
FIGs. 4A to 4C are explanatory drawings of a cam member, with FIG. 4A being a front view, FIG. 4B a right side view, and FIG. 4C a left side view.
FIGs. 5A to 5C are explanatory drawings of a casing, with FIG. 5A being a front view, FIG. 5B a right side view, and FIG. 5C a left side view.
FIGs. 6A to 6C are explanatory drawings of a positioning member, with FIG. 6A being a front view, FIG. 6B a right side view, and FIG. 6C a plan view.
FIG. 7 is a sectional view taken along the line VII-VII in FIG. 5B.
FIGs. 8A to 8C are explanatory drawings of a speed change mechanism operating member, with FIG. 8A being a right side view, FIG. 8B a bottom view, and FIG. 8C a sectional view taken along the line VIII-VIII in FIG. 8A.
FIGs. 9A and 9B are explanatory drawings of the control member, with FIG. 9A being a front view and FIG. 9B a right side view.
FIG. 10 is an explanatory drawing in cross section of a slide member in the process of being pressed with the slope surface of the control member and moved toward the cam member.
FIGs. 11A and 11B are explanatory drawings of the slide member pressed with a press-operation member of the control member and moved toward the cam member, with FIG. 11A being an explanatory drawing in cross section in the state of the slide member projecting outside the periphery of the small diameter portion of the cam member and with FIG. 11B an explanatory drawing in cross section of the slide member in contact with the side surface of the cam member.
FIG. 12 is a side view, partially in section, of an essential part with the slide member moving along the large diameter portion of the cam member.
FIG. 13 is an explanatory drawing of the slide member reaching the cam surface end of the large diameter portion of the cam member.
FIG. 14 is a side view, partially in section, of an essential part, with the slide member moved off the large diameter portion of the cam member and engage-stopped with the engage-stop portion of the control member.
FIG. 15 is a sectional explanatory view of the slide member in the state of being moved off the large diameter portion of the cam member and engage-stopped with the engage-stop portion of the control member.
FIGs. 16A to 16C show another embodiment of the control member, with FIG. 16A being a front view with the control shaft of the control member removed, FIG. 16B a right side view, and FIG. 16C a sectional view taken along the line XVI-XVI in FIG. 16B.

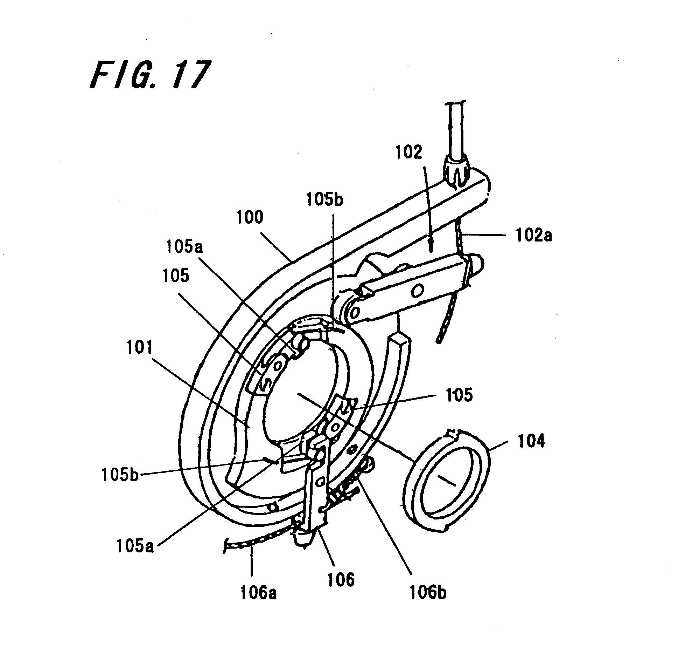

FIG. 17 is a drawing for explaining a conventional example.

### Detailed description of the invention

Details of an embodiment of the present invention are described below in reference to the appended drawings.

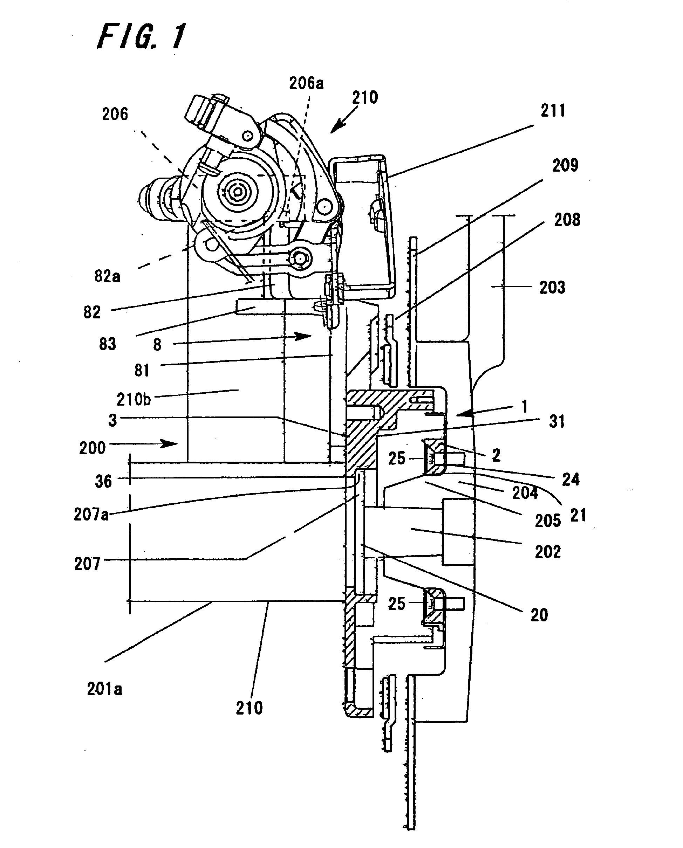

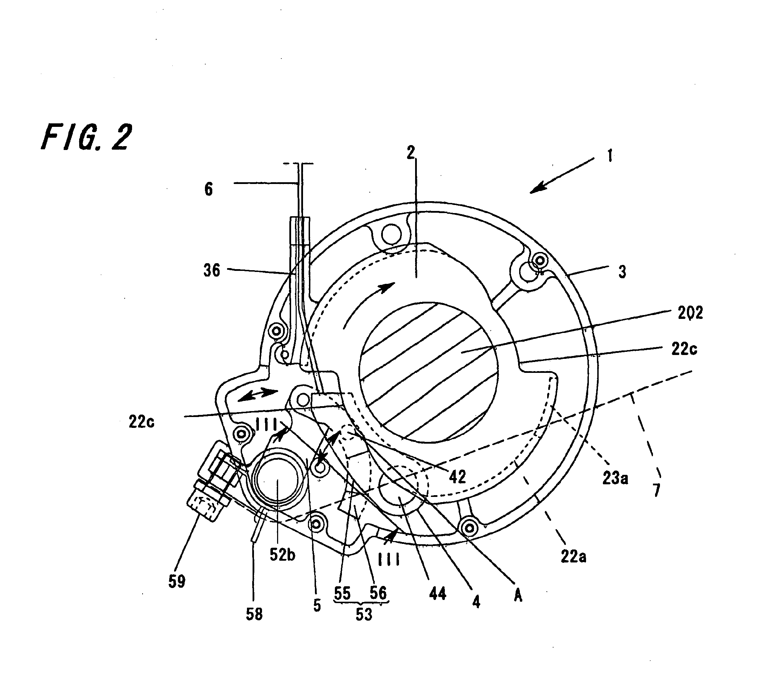

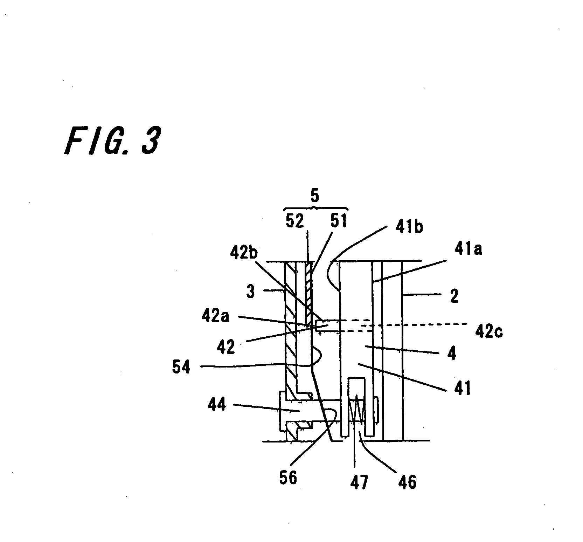

FIG. 1 is an explanatory drawing of an essential part of a bicycle employing a bicycle speed change auxiliary device of the present invention. FIG. 2 is a right side view, partially in section, of an essential part of the bicycle employing the bicycle speed change auxiliary device. FIG. 3 is a sectional explanatory view taken along the line III-III in FIG. 2. Incidentally, the terms up, down, right, and left as used in the following description are meant as seen in FIG. 1.

The bicycle speed change auxiliary device 1 of the present invention as shown in FIGs. 1 and 2 comprises: a cam member 2, a casing 3 disposed to the left of the cam member 2, a speed change mechanism operating member 4 for operating a speed change mechanism 210 (shown in FIG. 1) mounted on the bicycle to change speed, and a control member 5 for controlling the speed change mechanism operating member 4.

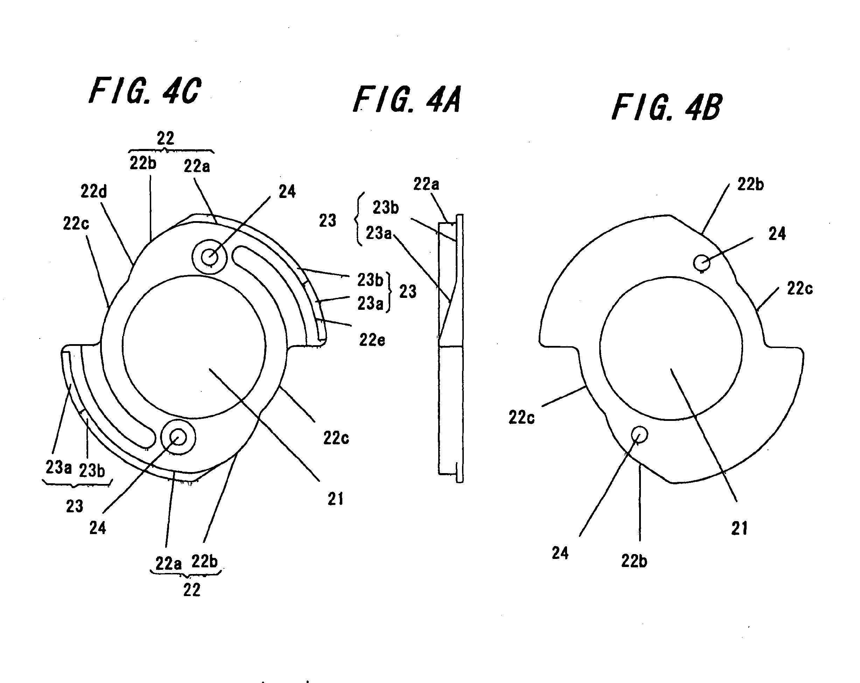

The cam member 2 is made in a plate shape as shown in FIGs. 4A, 4B, and 4C. The periphery of the cam member 2 has a cam surface 22 consisting of guide portions 22b, 22b and large diameter portions 22a, 22a.

The guide portions 22b, 22b serve to guide the slide member 42 of the speed change mechanism operating member 4 (to be described later) to the large diameter portions 22a, 22a. As shown in FIG. 4C, the guide portions 22b, 22b are formed to gradually enlarge radially and clockwise toward the large diameter portions 22a, 22a. The counterclockwise ends, as seen in FIG. 4C, of the guide portions 22b, 22b are the cam surface start points 22d where the slide member 42 of the speed change mechanism operating member 4 starts contacting with the cam surface when the cam member 2 rotates counterclockwise as seen in FIG. 4C and comes to the cam surface contactable position.

The large diameter portions 22a, 22a serve to press and move the slide member 42 of the speed change mechanism operating member 4 (to be described later) radially outward of the crankshaft 202. The clockwise ends, as seen in FIG. 4C, of the large diameter portions 22a, 22a are the cam surface ends 22e where the slide member 42 of the speed change mechanism operating member 4 ends contacting the cam surface.

Shift means 23 are provided on the side of the cam surface ends 22e of the cam member 2 to press and move the slide member 42 of the speed change mechanism operating member 4 toward the casing 3. Each of the shift means 23 of this embodiment is made up of a flat portion 23b formed on the periphery of the large diameter portion 22a on the right side of the cam member 2 and a sloped press portion 23a sloping up clockwise from the flat portion 23b toward the cam surface end 22e.

Clearance portions 22c, 22c are provided on the circumferential parts adjacent to the guide portions 22b, 22b of the cam member 2. Each clearance portion 22c is made smaller in diameter than the large diameter portion 22a and the guide portion 22b to keep the slide member 42 of the speed change mechanism operating member 4 off the cam member 2.

Incidentally, in this embodiment, the large diameter portions 22a, the guide portions 22b, and the clearance portions 22c are provided two for each in that order along the periphery.

The cam member 2 made as described above is fixed to the right-hand crank portion 204 provided on the bicycle 200. To describe it more in detail, as shown in FIG. 1, the crankshaft 202 is rotatably attached to a bottom bracket 201a, part of the frame 201 of the bicycle 200 used in this embodiment. The crankshaft 202 is provided with a right-hand crank arm 203 and a right-hand crank portion 204 having a boss portion 205, both as rotary members that rotate about the crankshaft 202. The cam member 2 is placed so that the boss portion 205 of the right-hand crank portion 204 is in the center hole 21 of the cam member 2, and secured to the boss portion 205 by means of securing bolts 25 inserted into the holes 24 drilled in the cam member 2. Therefore, the cam member 2 rotates together with the crankshaft 202 as the right-hand crank arm 203 turns.

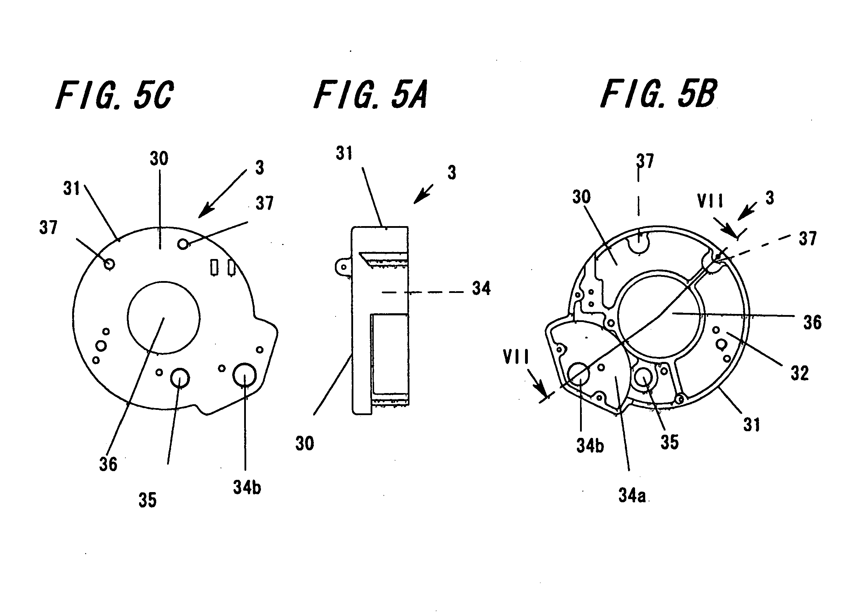

The casing 3 serves as a support member for supporting the speed change mechanism operating member 4 and the control member 5. As shown in FIGs. 5A, 5B, and 5C, the casing 3 is open to the right to receive and hold the speed change mechanism operating member 4 and the control member 5, and the opening is to be covered with a cover (not shown) . The casing 3 is made up of a left side wall 30 of a round plate shape, and a surrounding wall 31 integrally extending to the right from the periphery of the left side wall 30 to form a holding space 34 to hold the speed change mechanism operating member 4 and the control member 5.

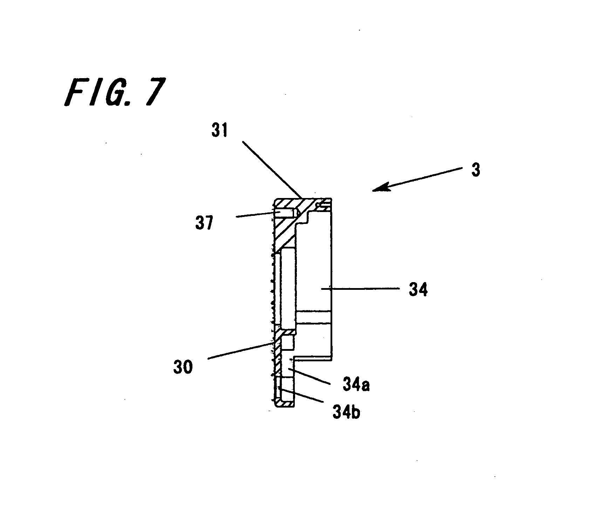

A control member holding space 34a for holding the control member 5 is provided in the left lower part as seen in FIG. 5B of the holding space 34. The peripheral wall of the control member holding space 34a is formed to rise from its radially outside edge. As shown in FIG. 7, the left-hand side wall 30 of the control member holding space 34a is recessed to the left of other parts.

As shown in FIG. 5B, an axial support hole 34b for axially supporting the control member 5 is bored in the left-hand side wall 30 of the control member holding space 34a. Also in the left-hand side wall 30 as shown in FIG. 5B, an axial support hole 35 for axially supporting the speed change mechanism operating member 4 is bored to the right of the axial support hole 34b for the control member 5.

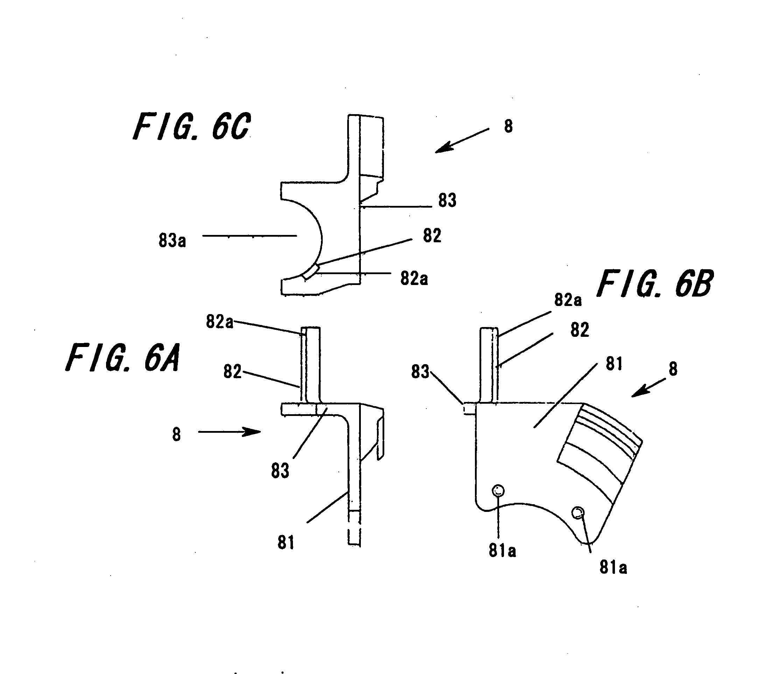

The casing 3 is provided with a positioning means for determining the relative position of the front speed change mechanism 210 (shown in FIG. 1) mounted on the bicycle 200. The positioning means in this embodiment is a positioning member 8 fixed to the casing 3. The positioning member 8 of this embodiment is, as shown in FIGs. 6A, 6B and 6C, provided with a casing fixing portion 81 or the lower part, a speed change mechanism positioning lug 82 or the upper part, and a frame positioning portion 83 interconnecting the speed change mechanism positioning lug 82 and the casing fixing portion 81.

The casing fixing portion 81 is to be fixed to the casing 3, and is provided with bolt passage holes 81a, 81a in right and left positions in its lower part. The casing fixing portion 81 is fixed to the casing 3 using fixing bolts after the bolt passage holes 81a, 81a are aligned, from the left side of the casing 3 as seen in FIG. 5A, with threaded holes 37, 37 (shown in FIG. 5B) bored in the casing 3.

The frame positioning portion 83 is to determine the position of the speed change mechanism positioning lug 82 relative to the frame 201 of the bicycle 200. As shown in FIG. 6C, a frame receiving portion 83a of a nearly semicircular recess shape in plan view is provided on the left side of the frame positioning portion 83 to receive a vertical pipe 201b (shown in FIG. 1), part of the frame 201 of the bicycle 200.

The speed change mechanism positioning lug 82 serves to position the front speed change mechanism 210 relative to the bicycle when the front speed change mechanism 210 is attached to the bicycle. The speed change mechanism positioning lug 82 extends up integrally with the frame positioning portion 83 and its top end has a band fitting portion 82a for fitting into a cut hole 206a (shown in FIG. 1) bored in a fixing band 206 of the front speed change mechanism 210.

As shown in FIG. 1, the casing 3 attached with the positioning member 8 constituted as described above is fixed as sandwiched between the bottom bracket 201a and the flange 207a of the shaft support sleeve 207 in the state of the vertical pipe 201b of the bicycle 200 being received in the frame receiving portion 83a of the frame positioning portion 83 and with the shaft support sleeve 207, which has the flange 207a attached when the crankshaft 202 is attached to the bottom bracket 201a, inserted into the sleeve fitting hole 36 in the center of a casing body 31. In this fixed state, the left side wall 30 of the casing body 31 faces the cam member 2 with an intermediate space in the axial direction of the crankshaft 202.

By the above fixing, the band fitting portion 82a of the speed change mechanism positioning lug 82 is placed in position with respect to up-and-down and right-and-left directions of the bicycle 200. Here, the front speed change mechanism 210 mounted on the bicycle 200 is briefly described.

The front speed change mechanism 210 as shown in FIG. 1 is provided with a chain guide 211 and the fixing band 206. The front speed change mechanism 210 is attached to the bicycle 200 as the fixing band 206 is fixed to the vertical pipe 201b of the bicycle 200. The chain guide 211 of the front speed change mechanism 210 mounted on the bicycle 200 is made movable right and left to guide and shift the chain (not shown) from the smaller, left-hand inner gear 208 provided in the crank portion 204 to the larger, right-hand outer gear 209 having a larger number of sprockets than the inner gear 208, or from the outer gear 209 to the inner gear 208.

When the bicycle 200 runs with the chain fitted around the inner gear 208, the chain guide 211 comes to the position (hereinafter called the inner gear position) where the chain guide 211 does not contact the chain running around the inner gear 208. Also when the bicycle 200 runs with the chain fitted around the outer gear 209, the chain guide 211 comes to the position (hereinafter called the outer gear position) where the chain guide 211 does not contact the chain running around the outer gear 209.

The chain guide 211 is set to the inner gear position with an adjusting screw (not shown) provided in the front speed change mechanism 210. When the speed change mechanism operation wire connected to the front speed change mechanism 210 is pulled, the chain guide 211 is moved from the inner gear position to the outer gear position to replace the chain from the inner gear 208 to the outer gear 209. A return spring (not shown) is provided in the front speed change mechanism 210 to move the chain guide 211 from the outer gear position back to the inner gear position by its urging force. In FIG. 1, however, the chain guide 211 is shown in a position more to the left than the inner gear position, a position before being adjusted with the adjustment screw.

To fix the front speed change mechanism 210 constituted as described above to the vertical pipe 201b using the fixing band 206, the band fitting portion 82a of the speed change mechanism positioning lug 82 is inserted into the cut hole 206a pre-formed in the fixing band 206. In this way, the front speed change mechanism 210 is attached to the vertical pipe 201b of the bicycle 200 easily and securely in position with respect to up-and-down and right-and-left directions.

As described above, the positioning means is provided with the positioning member 8 provided on the casing 3 serving as a support member, and the positioning member 8 is provided with the speed change mechanism positioning lug 82 for determining the position of the front speed change mechanism 210 relative to the bicycle 200, and with the frame positioning portion 83 for determining the position of the speed change mechanism positioning lug 82 relative to the bicycle 200 when the front speed change mechanism 210 is attached to the bicycle. With the above constitution, for example when the casing 3 is to be secured to the bicycle, the speed change mechanism positioning lug 82 may be positioned relative to the bicycle 200 by positioning and fixing the casing 3 by means of the frame positioning portion 83, and the front speed change mechanism 210 can be attached to the bicycle easily in position with respect to up-and-down and right-and-left directions by positioning the front speed change mechanism 210 by means of the speed change mechanism positioning lug 82.

Incidentally, the positioning means is not limited to the type in which the band fitting portion 82a of the speed change mechanism positioning lug 82 is inserted into the cut hole 206a pre-formed in the fixing band 206. Rather, it may appropriately be changed for example to a type in which a reference line is provided at the top end of the speed change mechanism positioning lug 82, the bottom end of the fixing band 206 is brought into contact with the speed change mechanism positioning lug 82, and a positioning line pre-provided on the speed change mechanism positioning lug 82 is aligned with the reference line.

Besides, the positioning member 8 is not limited to be a component separate from the casing 3 but may be formed integrally with the casing 3.

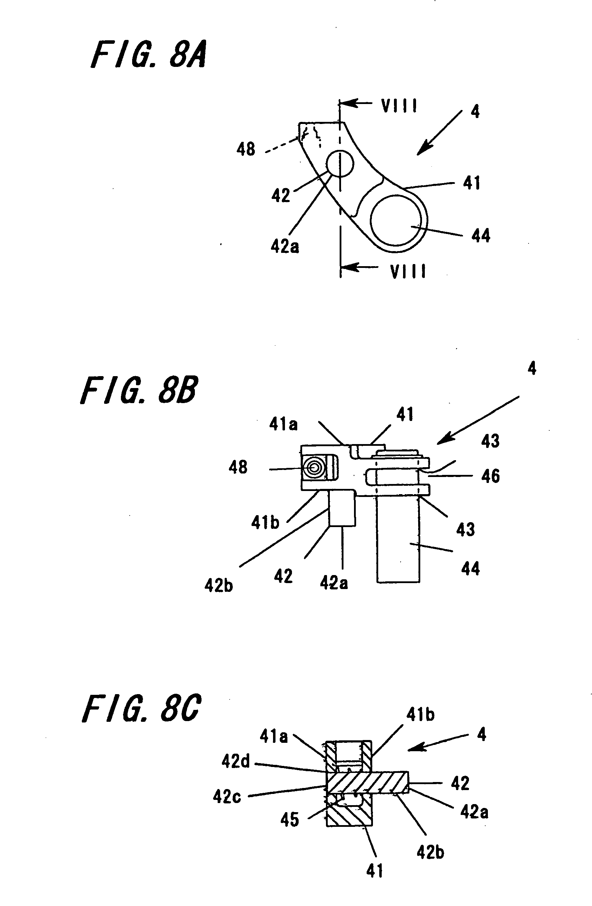

To continue the description of the bicycle speed change auxiliary device 1 of the present invention, the speed change mechanism operating member 4 placed in the casing 3 is provided, as shown in FIGs. 8A, 8B, and 8C, with the slide member 42, and an operating member body 41 holding the slide member 42 for free sliding.

The slide member 42 is a movable member of a round bar shape with its first end, the lower part as seen in FIG. 8B, having a control engage-stop portion 42b for being engage-stopped with an engage-stop portion 57 of a control member 5 which will be described later, and a slope contact portion 42a for contacting a slope surface 56 of the control member 5 which will be described later. The second end of the slide member 42 has a cam contact portion 42c for contacting the cam surface 22 of the cam member 2.

The slide member 42 is slidably inserted in a slide hole 42a bored through the operating member body 41 from the right-hand surface 41a to the left-hand surface 41b. The slide member 42 is constantly urged to the left (to the right in FIG. 8C) with a first coil spring 45, a first urging member, placed in the slide hole 42a.

As seen in FIG. 8A, the operating member body 41 is provided at its lower, second end with an operating member shaft 44 supported in the axial support hole 35 for a speed change mechanism operating member of the casing 3. The operating member shaft 44 is non-rotatably fitted in a shaft fitting hole 43 bored in the operating member body 41. As the operating member shaft 44 is supported with the axial support hole 35 for the speed change mechanism operating member of the casing 3, the operating member body 41 is supported with the casing 3.

Also in its axially supported state as shown in FIG. 3, the slide member 42 is set to project to the left, to the control member side from the left-hand surface 41b of the operating member body 41 and not to project to the right-hand surface 41a side, and positioned to the left of the cam member 2 with an axial distance from the cam member 2. In this state, if the slide member 42 is pushed to the right against the urging force of the first coil spring 45, the slide member 42 projects toward the cam member 2 from the right-hand surface 41a. In other words, as the slide member 42 moves to and away from the cam member 2 in the axial direction of the crankshaft 202 in the state of the operating member body 41 being supported with the casing 3, the slide member 42 moves across a range between a cam surface non-contactable position spaced in the axial direction of the crankshaft 202 from the cam member 2 and a cam surface contactable position for contacting the cam surface 22 of the cam member 2.

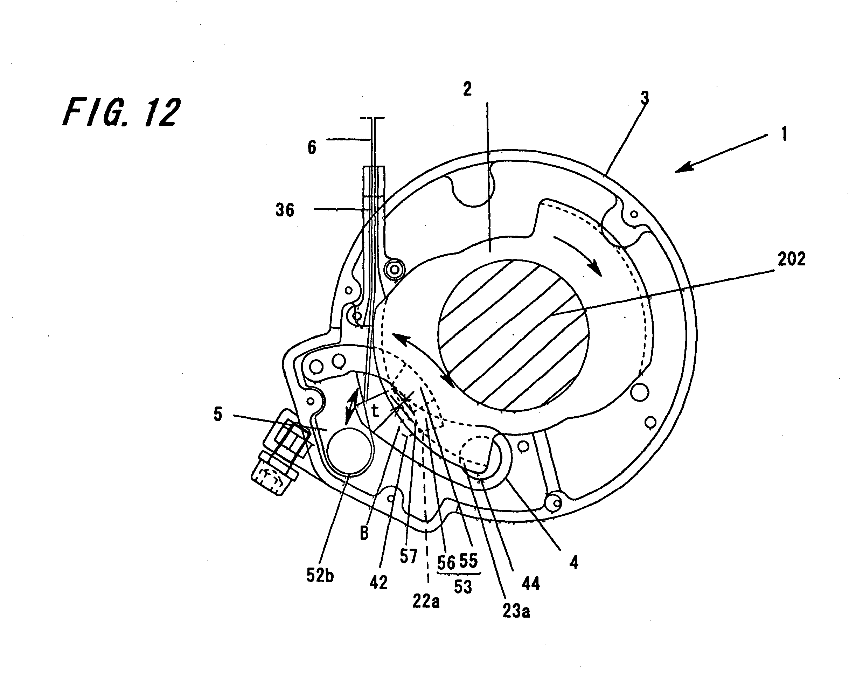

As the second end of the operating member body 41 is axially supported with the casing 3, the slide member 42 rotates and moves along the cam surface 22 of the cam member 2 over a range from the radially inner position A (shown in FIG. 2) which is radially inner relative to the crankshaft 202 at about the radius of the clearance portion 22c of the cam member 2 to the radially outer position B (shown in FIG. 12) which is radially outer relative to the crankshaft at about the radius of the large diameter portion 22a of the cam member 2.

When the operating member body 41 is axially supported with the casing 3, as shown in FIG. 3, a second urging member, a second coil spring 47 is installed in a spring holding groove 46 formed across the shaft fitting hole 43 of the operating member body 41. Therefore, the slide member 42 is constantly urged with the second coil spring 47 clockwise as seen in FIG. 2 in the radial direction of the crankshaft 202 from the outer side to the inner side.

A wire connecting portion 48 as a speed change mechanism connecting member for connecting a speed change mechanism operating wire 6 (shown in FIG. 2) is formed in the first end, upper end, of the operating member body 41 shown in FIG. 8A. In this embodiment, the speed change mechanism operating wire 6 connected to the wire connecting portion is the one connected to the front speed change mechanism 210 mounted on the bicycle. To describe it more in detail, as shown in FIGs. 1 and 2, the speed change mechanism operating wire 6 is passed from the front speed change mechanism 210 through the wire guide passage 36 attached to the casing 3 into the casing 3, and connected to the wire connecting portion 48.

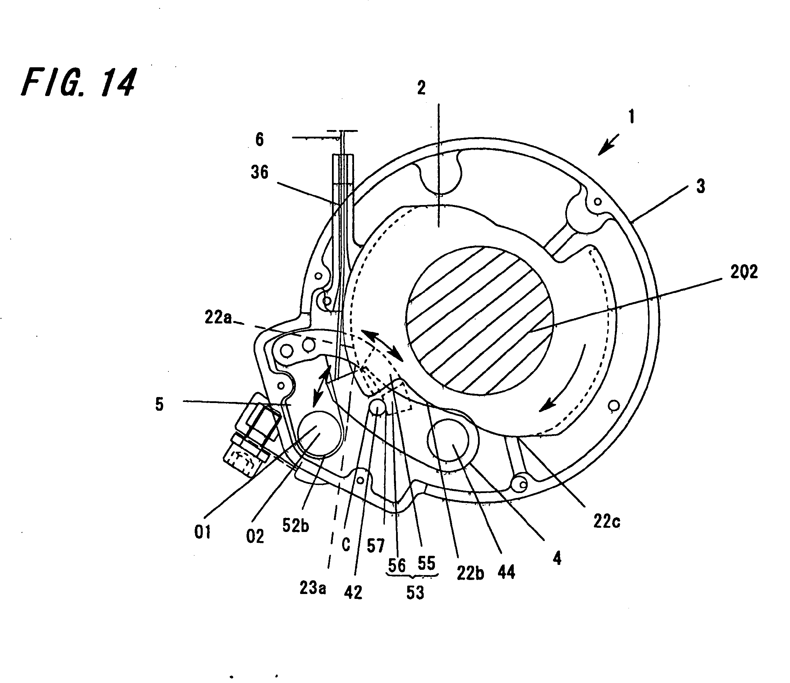

In this way, the front speed change mechanism 210 and the speed change mechanism operating member 4 are interconnected for interlocked operation through the speed change mechanism operating wire 6. As the second end rotates relative to the casing 3, the speed change mechanism operating wire 6 connected to the wire connecting portion 48 is pulled or loosened, and so the front speed change mechanism 210 is operated to change speed. Incidentally, while the central part of the cam member 2 is provided with a boss portion 205 of the right-hand crank part 204 secured to the crankshaft 202, they are shown for convenience of explanation as a single rotary member in FIG. 2. The same applies to FIGs. 12 and 14 described later.

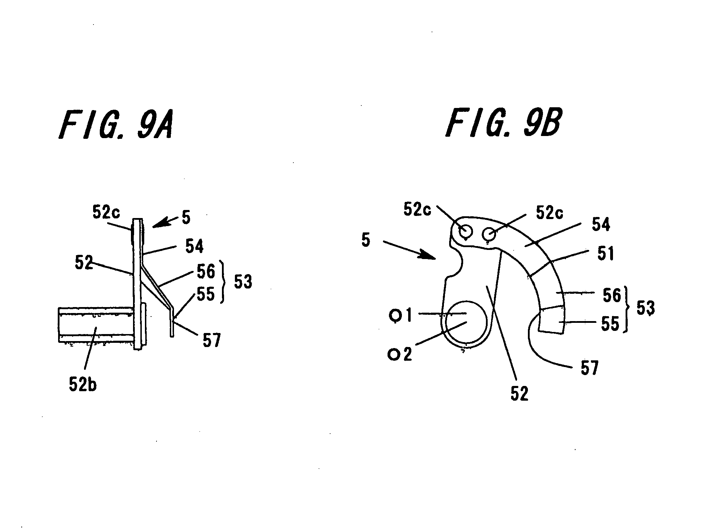

The control member 5 as shown in FIGs. 9A and 9B is made up of an operating member 51 for operating the speed change mechanism operating member 4 and an arm 52 which supports the operating member 51.

The operating member 51 is made as an elastically deformable, plate-like member in an arcuate shape with the center of arc at O1. The operating member 51 has an operating portion 53 on the right lower side as shown to operate the slide member 42 of the speed change mechanism operating member 4, and a connecting portion 54 on the left upper side as shown to interconnect the operating portion 53 and the arm 52. The operating portion 53 has a press-operating portion 55 for press-operating the slide member 42 of the speed change mechanism operating member 4, a slope surface 56 for guiding the slide member 42 of the speed change mechanism operating member 4 to the press-operating portion 55, and an engage-stop portion 57 for engaging with and disengaging from the slide member 42 of the speed change mechanism operating member 4 as required.

The slope surface 56 extends from the connecting portion 54 to the press-operating portion 55 and gradually approaches the speed change mechanism operating member 4 on the right-hand side as seen in FIG. 9A. The press-operating portion 55, continuous from the slope surface 56, is made to project to the right, as seen in FIG. 9A, of the connecting portion 54. The engage-stop portion 57 is the radially inside wall surface extending from the press-operating portion 55 to the slope surface 56. Therefore, the engage-stop portion 57 of this embodiment is arcuate centered on the point O1.

The upper end of the arm 52 as shown is secured to the connecting portion 54 of the operating member 51 by means of securing pins 52c, 52c. The lower end of the arm 52 as shown is provided with a control shaft 52b to be axially supported with the casing 3.

The control shaft 52b is axially supported with the axial support hole 34b for the control member in the casing 3. As shown in FIGs. 2 and 3, the connecting portion 54 of the control member 5, in the state of being axially supported with the casing 3, is placed to the left of the slide member 42 of the speed change mechanism operating member 4. As shown in FIG. 2, the operating portion 53 of the first end on the right upper side of the control member 5 is made rotatable, relative to the casing 3, about the second end on the left lower side. In this embodiment, as shown in FIG. 9B, the center O2 of rotation, relative to the casing 3, of the second end is located below the center of arc O1 of the engage-stop portion 57. Therefore, the distance from the rotary center 02 of the control member 5 to the engage-stop portion 57 increases gradually in the counterclockwise direction in FIG. 9B.

Incidentally, the engage-stop portion 57 is not limited to be made in an arcuate shape but may be in a curved or straight line shape with its distance from the rotary center 02 of the control member 5 gradually increasing in the counterclockwise direction in the drawing. Therefore, the term 'curved shape' used in Claim includes a straight line shape.

As shown in FIG. 2, a coil spring 58, an urging member, for urging the control member 5 clockwise in the drawing is provided on the control shaft 52b that axially supports the control member 5 on the casing 3. The control shaft 52b is connected to one end of a control member operating wire 7 by means of a securing bolt 59, etc. The other end of the control member operating wire 7 is connected to a wire operating member attached to a handlebar (not shown) of the bicycle, so that the wire 7 is pulled and loosened as the wire operating member is operated.

Next, how the bicycle speed change auxiliary device of this embodiment works will be described.

First, in the state of shown in FIG. 2, the chain guide 211 of the front speed change mechanism 210 is in the inner gear position with the chain girdling the inner gear 208.

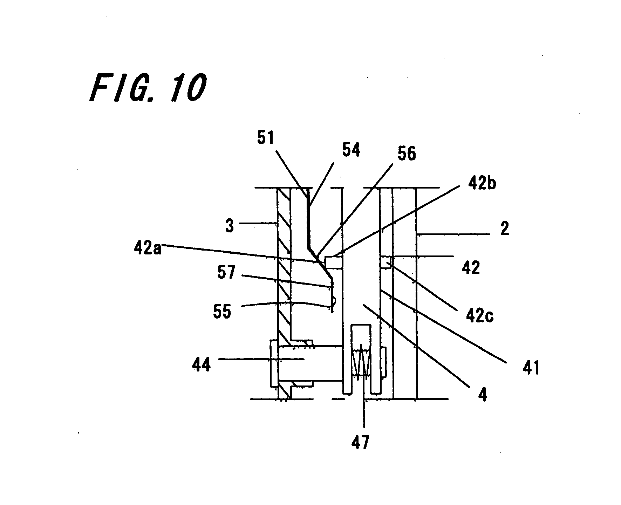

In the state shown in FIG. 2, the control member operating wire 7 is pulled by operating the wire operating member. As a result, the control member 5 rotates counterclockwise as seen in FIG. 2 against the urging force of the coil spring 58 for urging the control member 5. According to the rotation, as shown in FIG. 10, the slide member 42 of the speed change mechanism operating member 4 slides over the slope surface 56 of the control member 5. By the sliding motion on the slope surface 56, the slide member 42 is pushed toward the cam member 2 on the right against the urging force of the first coil spring 45 (shown in FIG. 8C), so that the slide member 42 gradually projects from the operating member body 41 to the right.

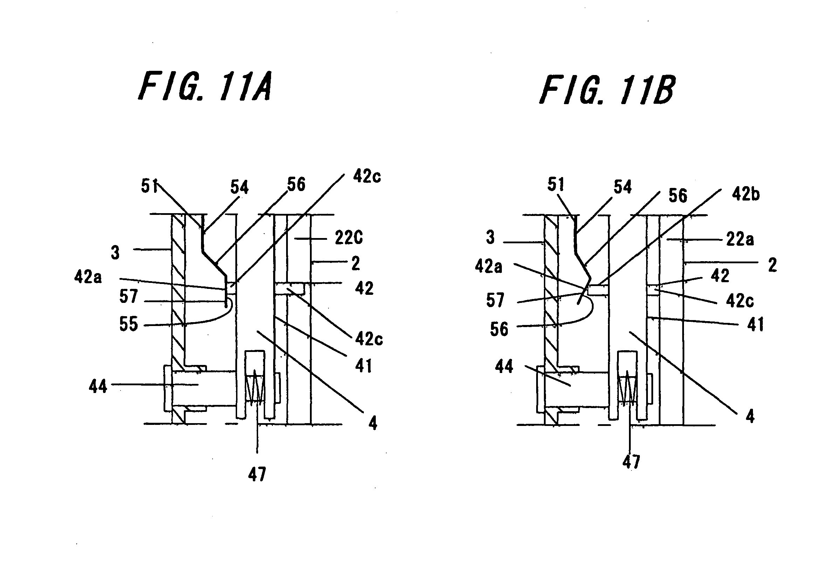

As the control member 5 further rotates counterclockwise, as shown in FIG. 11A, the slide member 42 is guided from the slope surface 56 of the control member 5 to the press-operating portion 55. At the press-operating portion 55, the slide member 42 is at the rightmost projected position from the operating member body 41.

In the case the clearance portion 22c of the cam member 2 is located to the right of the slide member 42 as shown in FIG. 11A when the slide member 42 is pushed with the press-operating portion 55, the right-hand end of the slide member 42 projects outside the clearance portion 22c of the cam member 2.

In the above state, if for example the pedal of the bicycle is depressed to rotate the right-hand crank arm clockwise as seen in FIG. 2, the cam member 2 is rotated clockwise. With the clockwise rotation of the cam member 2 as described above, the slide member 42 contacts the guide portion 22b of the cam member 2, and the slide member 42 follows along the cam surface 22 of the cam member 2 from the guide portion 22b to the large diameter portions 22a. With the above follow-up motion, the slide member 42 is pushed radially outward of the crankshaft. As a result, the speed change mechanism operating member 4 rotates counterclockwise as seen in FIG. 2 about the operating member shaft 44, and the slide member 42 moves as shown in FIG. 12 to a position radially outward of the crankshaft (radially outer position B) by a specified distance of t beyond the engage-stop portion 57 of the operating portion 53.

On the other hand, in the case the large diameter portions 22a, 22a or the guide portions 22b, 22b of the cam member 2 are located to the right of the slide member 42 as shown in FIG. 11B when the slide member 42 is pushed with the press-operating portion 55, the right-hand tip of the slide member 42 contacts the left side surface of the cam member 2 and cannot project. As a result, the operating member 51 deflects, so that the right-hand tip of the slide member 42 is pressed against the left side surface of the cam member 2.

When the cam member 2 rotates from the above state and the clearance portion 22c of the cam member 2 is in agreement with the slide member 42, as shown in FIG. 11A, the right-hand tip of the slide member 42 projects toward the periphery of the clearance portion 22c of the cam member 2 by the elastic force of the operating member 51. Thereafter, like the above description, the slide member 42 contacts the guide portion 22b of the cam member 2 as the cam 2 rotates, and the slide member 42 follows along the cam surface 22 of the cam member 2 from the guide portion 22b to the large diameter portions 22a.

As the slide member 42 of the speed change mechanism operating member 4 moves radially outward of the crankshaft, the speed change mechanism operating wire 6 connected to the speed change mechanism 4 is pulled to operate the front speed change mechanism 210 and to move the chain guide 211 of the front speed change mechanism 210 to the right as seen in FIG. 1. As a result, the chain is replaced from the inner gear 208 to the outer gear 209 to change speed with the front speed change mechanism 210.

Incidentally, this embodiment is arranged that, when the slide member 42 is in the radially outer position B as the slide member 42 is pushed radially outward of the crankshaft with the large diameter portion 22a of the cam surface 22, the chain guide 211 of the front speed change mechanism 210 is in a position moved to the right slightly beyond the outer gear position, to be in a so-called over-shifted state. The above arrangement enables smooth replacement of the chain from the inner gear 208 to the outer gear 209 with the front speed change mechanism 210.

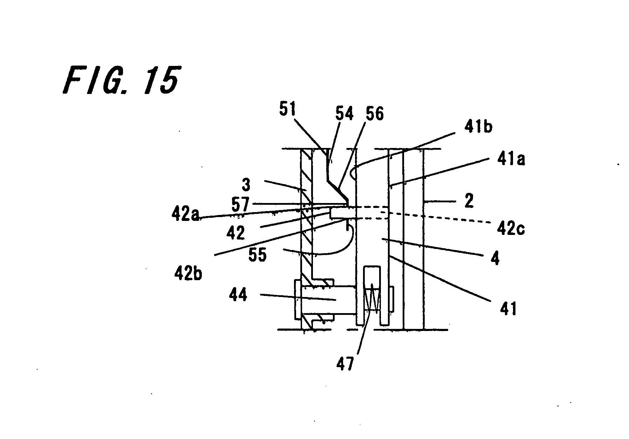

When the cam member 2 rotates further and the slide member 42 comes off the large diameter portion 22a of the cam member 2, the slide member 42 in a projected position to the right of the operating member body 41 projects with the urging force of the first coil spring 45 as shown in FIG. 15 to the left of the operating member body 41 and as shown in FIG. 14 radially inside of the press-operating portion 55. At the same time, since the operating member body 41 is urged clockwise as shown in FIG. 12 with the second coil spring 47 and the return spring of the front speed change mechanism 210, the slide member 42 moves as shown in FIG. 14 to a position (position C) radially inward of the crankshaft by a distance of t from the radially outer position B shown in FIG. 12.

When the slide member 42 moves to the position C where the engage-stop portion 57 of the operating portion 53 is present, the slide member 42 is engage-stopped with the engage-stop portion 57. In the engage-stopped state, since the right-hand tip of the slide member 42 is spaced from the cam member 2 as shown in FIG. 15, the slide member 42 does not come into contact with the rotating cam member 2. Therefore, the speed change mechanism operating member 4 having the slide member 42 remains in that position. As the slide member 42 moves to the position C, the front speed change mechanism 210 moves to the outer gear position.

At that time, it may happen that the slide member 42 is hard to project to the left of the operating member body 41 due to for example the resistance caused by the pressing force of the large diameter portion 22a of the cam member 2. Therefore for example, it occurs undesirably that the slide member 42, before projecting to the left of the operating member body 41, moves to the radially inner position A due to the urging force of the second coil spring 47 and the return spring of the front speed change mechanism 210, and cannot be engage-stopped with the engage-stop portion 57.

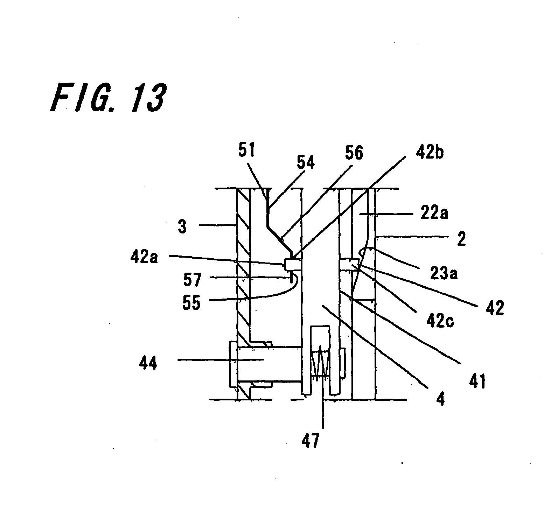

With this embodiment, however, since the sloped press portion 23a is provided on the peripheral side of the large diameter portion 22a of the cam member 2, when the slide member 42 comes to the cam surface end 22e of the large diameter portion 22a as shown in FIG. 13, the slide member 42 is forced out toward the operating member body 41 with the sloped press portion 23a. Therefore, it is possible that the slide member 42 that has come to the cam surface end 22e of the large diameter portion 22a is securely projected to the left of the operating member body 41 and engage-stopped with the engage-stop portion 57 even if the resistance due to the pressure from the large diameter portion 22a of the cam member 2 is greater than the urging force of the first coil spring 45.

Next, in order to replace the chain from the outer gear 209 to the inner gear 208 using the front speed change mechanism 210, the control member operating wire 7 is loosened by operating the wire operating member. As a result, the control member 5 is rotated about the control shaft 52b clockwise as seen in FIG. 14 as urged with the coil spring 58 for urging the control member and the return spring of the front speed change mechanism 210. With that rotation, the engage-stop portion 57 of the control member 5 that has been engage-stopping the slide member 42 of the speed change mechanism operating member 4 moves down as seen in the drawing and disengages the slide member 42.

At this time, since the slide member 42 is urged with the second coil spring 47 and the return spring of the front speed change mechanism 210 clockwise in FIG. 14, the engage-stop portion 57 is under a pressing force from the slide member 42. Therefore, in the case for example the center of arc of the engage-stop portion 57 is in agreement with the rotation center 02, the engage-stop portion 57 is hard to rotate because the pressing force from the slide member 42 works as a resistance against the rotation of the engage-stop portion 57. Therefore, while the urging force of the coil spring 58 for urging the control member 5 must be great so that the engage-stop portion 57 can rotate with the urging force of the coil spring 58 for urging the control member against the pressing force of the slide member 42, the use of the coil spring 58 having a great urging force ends up in making the control member 5 hard to rotate.

However, this embodiment is arranged that the center of arc O1 of the engage-stop portion 57 is set above the rotary center O2 as seen in FIG. 14 so that the distance between the rotary center O2 and the engage-stop portion 57 gradually increases counterclockwise in FIG. 14. Therefore, when the engage-stop portion 57 in contact with the slide member 42 rotates clockwise in FIG. 14, the engage-stop portion 57 recedes radially inward of the crankshaft 202, and the slide member 42 moves radially inward of the crankshaft 202 by the amount of the recession of the engage-stop portion 57 radially inward of the crankshaft 202. As a result, the engage-stop portion 57 can rotate while reducing the rotary resistance given with the slide member 42. Therefore, the engage-stop portion 57 can rotate smoothly even with the coil spring 58 having a small urging force for urging the control member. Therefore, the control member 5 is made easy to rotate even with the coil spring 58 having a small urging force.

The speed change mechanism operating member 4 disengaged as described above rotates clockwise as seen in FIG. 14 and moves to the radially inner position A in FIG. 2. In this state too, the slide member 42, spaced from the cam member 2 as shown in FIG. 3, does not strike the cam member 2 when it rotates. Therefore, the speed change mechanism operating member 4 having the slide member 42 remains in that position.

With the motion of the speed change mechanism operating member 4, the chain guide 211 of the front speed change mechanism 210 moves from the outer gear position to the inner gear position by the return spring of the front speed change mechanism 210, so that the chain is replaced from the outer gear 209 to the inner gear 208.

Incidentally, the above embodiment is arranged by providing the speed change mechanism operating member 4 with the slide member 42 as an axially movable member, so that the speed change mechanism operating member 4 can contact the cam member 2 by the axial motion of the slide member 42. However, the arrangement may appropriately be changed for example such that the cam contact portion of the speed change mechanism operating member 4 is fixed to the operating member body 41, so that the speed change mechanism operating member 4 as a whole is movable in the axial direction.

While the above embodiment is arranged that the operating member 41 causes the slide member 42 as a movable member to slide nearly parallel to the axial direction of the crankshaft 202 as a rotary shaft, the slide member 42 has only to move from the cam surface non-contactable position to the cam surface contactable position. Therefore, it may be arranged for example that the slide member slides at a certain angle to the axial direction of the crankshaft over the range from the cam surface non-contactable position to the cam surface contactable position. Therefore, the term 'axial motion' in Claim should be interpreted to include the motion having axial component. Likewise, the 'axial force' in Claim should be interpreted to include the force having axial component.

The movable member is not limited to the slide member 42 that slides in the operating member body 41. Rather, the movable member may be attached to the operating member body 41 so that the movable member can move over the range from the cam surface non-contactable position to the cam surface contactable position.

The above embodiment is arranged that the left-hand side wall 30 of the casing 3 serves as a support member for supporting the speed change mechanism operating member 4 and the control member 5. However, the arrangement may be changed appropriately. For example, the support member 3 may be of a plate shape. An arrangement is not limited to the one in which the support member 3 is secured to the bottom bracket 201a of the frame 201 of the bicycle 200. It may also be arranged that for example the front speed change mechanism 210 is integral with the support member 3, or they are separate members detachably interconnected with bolts or the like. Or, in that case, it may be arranged that both of the front speed change mechanism 210 and the support member 3 are attached to the bicycle 200 like in the above embodiment, or it may be arranged that the support member 3 or the front speed change mechanism 210 is mounted on the bicycle 200 by attaching one of the support member 3 and the front speed change mechanism 210. In that way, the attachment work is simplified.

The support member 3 need not necessarily be made separate from the frame 201 of the bicycle 200. It may be arranged for example that part of the frame 201 of the bicycle 200 serves as a support member. Therefore, the phrase 'support member secured to a frame' in Claim includes the support member that is part of the frame 201.

The cam member 2 is not limited to the one of the plate shape in the above embodiment. It may be arranged for example that the right-hand crank member 204 of the bicycle 200 has the cam surface 22 consisting of the guide portions 22b, 22b and the large diameter portions 22a, 22a.

This embodiment is arranged that the control member 5 is axially supported with the support member 3 so as to move the slide member 42 of the speed change mechanism operating member 4 toward the cam member 2 by sliding the slide member 42 along the slope surface 56 when the control member 5 rotates. However, the arrangement is not limited to this embodiment but may appropriately be changed. For example, it may be arranged that the control member 5 is supported with the support member 3 so as to be movable in the axial direction of the crankshaft 202 and the slide member 42 is moved toward the cam member 2 when the control member 5 moves in the axial direction.

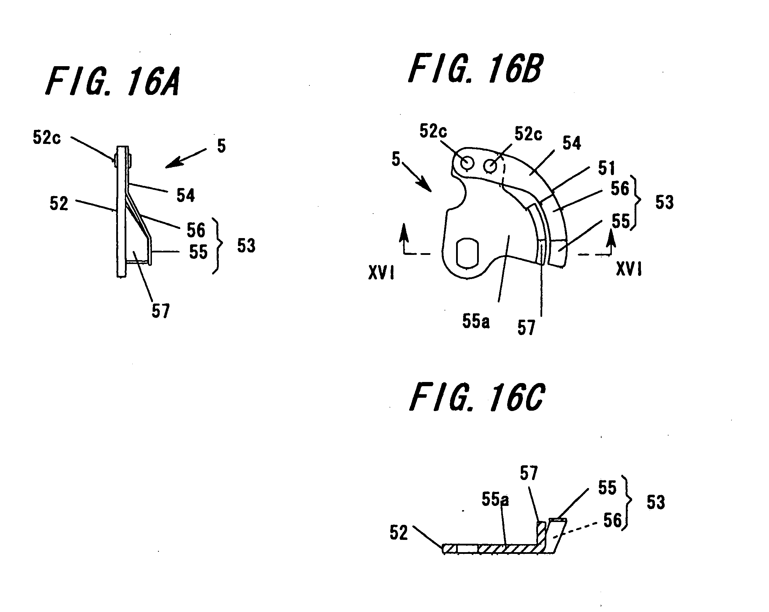

This embodiment is also arranged that the engage-stop portion 57 of the control member 5 is formed on the side wall of the operating member 51 over the range from the press operating portion 55 to the slope surface 56. However, the arrangement may be changed appropriately. For example, the engage-stop portion 57 may be formed on the arm 52 that is separate from the operating member 51. To describe it more in detail, as shown in FIGs. 16A, 16B, and 16C for example, the arm 52 is made of a plate material thicker than the operating member 51 to be harder to deflect, with a portion 55a extending toward the press operating member 55, and the engage-stop portion 57 is formed by bending an end of the extended portion 55a. In the case the engage-stop portion 57 is formed on the side wall of the operating member 51 over the range from the press operating portion 55 to the slope surface 56 of the control member 5 shown in FIGs. 9A and 9B described above, the engage-stop portion 57 might be deformed gradually by repeated operation of engage-stopping the slide member 42 of the speed change mechanism operating member 4 therewith. Therefore, the engage-stop portion 57 may be made with part of the arm 52 made of a thick plate material which is less likely to deform even after repeated use.

The above embodiment is arranged to use the elastically deformable operating member 51 as a means for giving elasticity to the control member 5. However, the arrangement is not limited to the above embodiment. For example, it may be arranged that the operating member 51 is made of a material that is substantially non-deformable and the operating member 51 is axially movably connected, with an intermediate space, to the arm 52, so that a coil spring as an elastic member, capable of expanding and contracting for absorbing and storing force, is placed in the intermediate space. Thus, for example in the case the slide member 42 of the speed change mechanism operating member 4 contacts the large diameter portion 22a of the cam surface 22 and cannot move up to the cam surface contactable position, and a force greater than specified is exerted to the press operating portion 55 of the operating member 51, the coil spring contracts, and the operating member 51 moves toward the arm 52. When the slide member 42 of the speed change mechanism operating member 4 becomes movable up to the cam surface contactable position, the coil spring expands, and the slide member 42 of the speed change mechanism operating member 4 is pushed and moved to the cam surface contactable position with the operating member 51 as the coil spring expands.

It may also be arranged, in the case the expansion-and-contraction coil spring is used as an elastic member, the control member 5 is supported for axial motion with an intermediate space with the casing 3, and the expansion-and-contraction coil spring as an elastic member is disposed in the intermediate space.

The above embodiment is also arranged as follows: the speed change mechanism operating member 4 is provided with the first urging member 45 for constantly urging it from the cam surface contactable position toward the cam non-contactable position, and the second urging member 47 for urging it from the radially outside toward radially inside of the rotary shaft. With the above arrangement, for example the speed change mechanism operating member 4 is moved with the cam surface of the cam member radially outward of the rotary shaft by moving the speed change mechanism operating member 4 from the cam surface non-contactable position to the cam surface contactable position by the control member 5. In the case the front speed change mechanism 210 is to be replaced from the inner gear to the outer gear to change speed, and then from the outer gear to the inner gear, for example, it is possible to replace the mechanism 210 from the cam surface contactable position to the cam surface non-contactable position with the first urging member 45 and from the radially outside to inside of the rotary shaft with the second urging member 47. Thus the operation is simplified. Also for example in order to return the front speed change mechanism 210, shifted from the inner gear to the outer gear, back from the outer gear to the inner gear, it may be arranged that the speed change mechanism operating member 4 need not contact and follow the cam surface 22 of the cam member 2. Therefore, the speed change mechanism operating member 4, unlike in the conventional arrangement in which the member 4 must be constantly in contact with the cam surface 22 of the cam member 2, has only to be in contact with the cam surface 22 when the member 4 is to be moved radially outward of the rotary shaft. Thus, the cam surface 22 is made less likely to wear off.

However, the arrangement is not limited to the above embodiment. For example, the speed change mechanism operating member 4 may not be provided with the second urging member 47. In such an arrangement too, the speed change mechanism operating member 4 may be urged with the return spring of the front speed change mechanism 210 constantly in the direction from the cam surface contactable position to the cam surface non-contactable position. However, providing the second urging member 47 is preferable from the viewpoint of constantly urging the speed change mechanism operating member 4 from the cam surface contactable position toward the cam surface non-contactable position. It is also possible to omit the first urging member 45 in the speed change mechanism operating member 4. In that case too, if the sloped press portion 23a is provided at the cam surface end 22e of the cam surface 22 of the cam member 2 as a means for moving the speed change mechanism operating member 4 from the cam surface contactable position to the cam surface non-contactable position, the cam 2 can be moved from the cam surface contactable position to the cam surface non-contactable position.

While the device 1 of the present invention is attached on the right of the crankshaft 202 of the bicycle 200, the arrangement may appropriately be changed to provide the device 1 on the left of the crankshaft 202 of the bicycle 200.

While this embodiment uses the device 1 of the present invention as the front speed change mechanism 210, the embodiment may appropriately be changed to use the device as the rear speed change mechanism.

The speed change auxiliary device for bicycles of the present invention is arranged that the control member causes the cam contacting portion of the speed change mechanism operating member to move from the cam non-contactable position to the cam contactable position, so that the cam contacting portion of the speed change mechanism operating member, connected for interlocked motion with the speed change mechanism attached to the bicycle, moves along in contact with the cam surface in the cam surface contactable position. With the motion of the cam contacting portion, the speed change mechanism can be operated to change speed. Therefore, it has only to be arranged that the cam member is secured to the rotary member of the bicycle so that the cam member is rotatable together with the rotary member, which makes it easy to attach the cam member to the bicycle. Moreover, unlike with the conventional arrangement, the pawl member and the like for catching and releasing the cam member and the rotary member is made unnecessary. Therefore, the number of components is reduced and so the manufacture is made easy at a reduced cost.

The speed change auxiliary device for bicycles of the present invention is also arranged that the second end of the speed change mechanism operating member is rotatably supported with the support member, so that the speed change mechanism connecting portion can move along the cam surface of the cam member from radially inside radially outward of the rotary shaft. As the speed change mechanism connecting member moves from radially inside position radially outward of the rotary shaft, the speed change mechanism is operated to change speed. In this way, attachment of the speed change mechanism operating member to the support member is simplified.

The speed change auxiliary device for bicycles of the present invention is also arranged that the slope surface contact portion of the speed change mechanism operating member is operated to move along the slope surface from the cam contactable position to the cam non-contactable position along with the rotation of the operating member in one direction, it is possible to move the speed change mechanism operating member smoothly and securely from the cam contactable position to the cam non-contactable position.

The speed change auxiliary device for bicycles of the present invention is also arranged that the control member is provided with the engage-stop portion for engaging with and disengaging as intended from the speed change mechanism operating member that has moved radially outward of the rotary shaft after moving along the cam surface of the cam member. Therefore, the single control member is made to serve both as an operating member for moving the speed change mechanism operating member from the cam surface non-contactable position to the cam surface contactable position and as an engage-stop member for engage-stopping the speed change mechanism operating member that has moved radially outward of the rotary shaft. As a result, the operating member and the engage-stop portion need not be provided separately, and the manufacture is made easy at a low cost.

In the case, for example, the control member operating wire interconnecting the control member and the wire operating member breaks or the wire comes off the control member, the operating member is rotated with the urging member, so that the engage-stop portion disengages from the speed change mechanism operating member. In that state, the speed change mechanism operating member can be moved from radially outside inward of the rotary shaft by means of, for example, the return spring or the like of the front speed change mechanism connected to the speed change mechanism operating member. Therefore, in the case of a trouble such as the breakage or disconnection of the control member operating wire from the control member while the bicycle is running, the speed change mechanism operating member moves radially inward of the rotary shaft, and the speed change mechanism constantly produces a state in which the chain is placed on a predetermined gear with which the bicycle is easy to ride.

Besides, even in the case the urging member of the control member becomes weaker in use, the speed change mechanism operating member does not contact the cam surface unless the speed change mechanism operating member is operated to move from the cam surface non-contactable position to the cam surface contactable position. Therefore, the speed change mechanism is prevented from repeating speed changing operation. Therefore, even if a trouble occurs with the urging member of the control member while the bicycle is running, one can ride the bicycle free from trouble.

The speed change auxiliary device for bicycles of the present invention is also arranged that the engage-stop portion of the control member is formed in the curved shape with its distance from the rotary center of the operating member increasing gradually in one rotary direction of the operating member. Therefore, even when a pressing force is exerted to the engage-stop portion of the control member with the return spring provided, for example, in the front speed change mechanism, the engage-stop portion can rotate smoothly while reducing the rotary resistance received from the speed change mechanism operating member at the time of the operating member rotating in one direction. Therefore, the speed change mechanism operating member can be disengaged easily.

The speed change auxiliary device for bicycles of the present invention is also arranged that, when for example the control engage-stop portion of the speed change mechanism operating member comes to the radially inner position, the chain guide of the front speed change mechanism comes to the inner gear position. It is also arranged that, when the control engage-stop portion of the speed change mechanism operating member comes to the position for engaging with the engage-stop portion of the control member, the chain guide of the front speed change mechanism is in the outer gear position. With the above arrangement, in the case the chain is replaced from the inner gear to the outer gear, the control engage-stop portion of the speed change mechanism operating member moves along the cam from the radially inner position to the radially outer position for the moment. At this time, the chain guide of the front speed change mechanism moves from the inner gear position beyond the outer gear position, to be in the so-called over-shifted state. As a result, the chain can be replaced smoothly from the inner gear to the outer gear with the front gear change mechanism.

After that, the control engage-stop portion of the speed change mechanism operating member is engage-stopped with the engage-stop portion placed in a position distant by a specified distance radially inward from the radially outer position by the urging force of the return spring provided in the front speed change mechanism. In this engage-stopped state, the chain guide of the front speed change mechanism moves to the outer gear position and remains in that position. Therefore, after the chain is replaced from the inner gear to the outer gear, the chain guide can be retained in the outer gear position, so that the chain guide is prevented from hitting the chain when the bicycle runs.

The speed change auxiliary device for bicycles of the present invention is also arranged that, when the cam contact portion of the speed change mechanism operating member is to be moved with the operating member from the cam non-contactable position to the cam contactable position but cannot be moved because of the large diameter portion 22a of the cam member 2 standing in the way as shown in FIG. 11B, the force exerted from the slope surface contact portion of the speed change mechanism operating member to the operating member can be absorbed and stored with the elasticity holding means of the operating member. In this way, the operating member can be operated smoothly even when the cam contact portion of the speed change mechanism operating member cannot move to the cam contactable position.

After that, when the cam member rotates and the cam contact portion of the speed change mechanism operating member becomes movable to the cam contactable position, the operating member, with the elastic force stored in the elastic force holding means, can move the cam contact portion of the speed change mechanism operating member to the cam contactable position. Thus, for example, the control member operating wire connected for operating the control member is prevented from elongating or breaking. It is also possible to perform a reserved operation, which is very convenient.

The speed change auxiliary device for bicycles of the present invention is also arranged that the operating member is made as an operating lug that is elastically deformable and the engage-stop portion is made at part of the arm which supports the operating lug. Therefore, the engage-stop member can be made to be separate from the operating lug so that it substantially does not deform elastically. As a result, the speed change mechanism operating member can be securely engage-stopped without the engage-stop portion deforming.

In another situation for example as shown in FIG. 12 in which the speed change mechanism operating member 4 is moved with the cam member 2 to the radially outer position B radially outward of the rotary shaft, and then is undesirably moved radially inward of the crankshaft 202 as the rotary shaft of the speed change mechanism operating member 4 with the urging force of the second urging member or the second coil spring 47 (shown in FIG. 10) and the return spring (not shown) of the front speed change mechanism before being moved from the cam contactable position to the cam non-contactable position with the urging force of the first urging member or the first coil spring 45 (shown in FIG. 8C), it cannot be engage-stopped with the engage-stop portion 57 and undesirably returns to the original, radially inner position A of the crankshaft 202 as shown in FIG. 2.

The speed change auxiliary device for bicycles of the present invention, however, is arranged that, for example as shown in FIG. 13, the cam surface end 22e of the cam surface 22 of the cam member 2 is provided with a moving means or the sloped press portion 23a for moving the speed change mechanism operating member 4 from the cam surface contactable position toward the cam surface non-contactable position. Therefore, the speed change mechanism operating member 4 can forcibly be moved with the sloped press portion 23a to the cam surface non-contactable position. Therefore, the speed change mechanism operating member 4 that has come up to the cam surface end 22e can be held in the engage-stopped state with the engage-stop portion 57 even in the case the resistance due to the pressure on the cam surface 22 is greater than the urging force of the first coil spring 45.

The speed change auxiliary device for bicycles of the present invention is arranged that when the movable lug is moved relative to the operating member body in the axial direction of the rotary shaft from the cam non-contactable position to the cam contactable position, the movable lug contacts the cam surface at the cam contactable position, the movable lug moves radially outward of the rotary shaft, and with that movement, the speed change mechanism operating member, together with the movable lug, can be moved radially outward of the rotary shaft. Therefore, it is not necessary to arrange the entire speed change mechanism operating member to be axially movable but only the movable lug need be made axially movable. As a result, the arrangement is easy to manufacture.

Since the speed change mechanism operating member is connected for interlocked motion with the speed change mechanism, it is less easy to axially move the entire speed change mechanism operating member. However, by arranging that only the movable lug is axially movable, the axial motion is facilitated.

The speed change auxiliary device for bicycles of the present invention is also arranged that the support member that supports the speed change mechanism operating member and the control member is provided with the positioning means for determining the position of attaching the front speed change mechanism relative to the bicycle. Therefore, the front speed change mechanism can be attached to the bicycle in position with respect to up-and-down and right-and-left directions of the bicycle. Accordingly, the attachment work is facilitated.

## Claims

1. A speed change auxiliary device for a bicycle (200), comprising:
a cam member (2) having a cam surface (22) secured to a rotary member having a rotary shaft provided on the bicycle (200), and
a support member (3) secured to the frame of the bicycle (200),
**characterized in that** the speed change auxiliary device further comprises:
a speed change mechanism operating member (4) connected for interlocked motion with a speed change mechanism (210) attached to the bicycle (200) and supported with the support member (3) so as to be movable along the cam surface (22) of the cam member (2) that rotates together with the rotary member, and provided with a cam contact portion (42c) capable of moving relative to the cam member (2) over a range from a cam surface non-contactable point where the speed change mechanism operating member (4) cannot contact the cam surface (22) to a cam surface contactable point where the speed change mechanism operating member (4) can contact the cam surface (22), and
a control member (5) for operating the cam contact portion (42c) of the speed change mechanism operating member (4) to move from the cam non-contactable point to the cam contactable point.

2. A speed change auxiliary device for a bicycle (200) according to claim 1, wherein a first end of the speed change mechanism operating member (4) is provided with a speed change mechanism connecting portion connected to the speed change mechanism (210) and a second end of the speed change mechanism operating member (4) is rotatably supported with the support member (3), so that the speed change mechanism connecting portion is movable along the cam surface (22) of the cam member (2) from a radially inner position with respect to the rotary shaft to a radially outer position with respect to the rotary shaft, and
the cam contact portion (42c) of the speed change mechanism operating member (4) moves relative to the cam member (2) from the cam surface non-contactable point to the cam surface contactable point in the axial direction of the rotary shaft.

3. A speed change auxiliary device for a bicycle (200) according to claim 1 or 2, wherein the first end of the control member (5) is provided with an operating member having a slope surface (56) for moving the cam contact portion (42c) of the speed change mechanism operating member (4) from the cam non-contactable point to the cam contactable point,
the speed change mechanism operating member (4) is provided with a slope surface contacting portion for contacting the slope surface (56), and
the slope surface contacting portion of the speed change mechanism operating member (4) is caused to slide on the operating member having the slope surface (56) and move from the cam non-contactable point to the cam contactable point along with rotation in one direction of the operating member as the second end of the control member (5) is made rotatable about the second end.

4. A speed change auxiliary device for a bicycle (200) according to claim 3, wherein the speed change mechanism operating member (4) is provided with a control engage-stop portion to be engage-stopped with the control member,
the control member (5) is further provided with an engage-stop portion for engaging with or disengaging from the control engage-stop portion of the speed change mechanism operating member,
the control member (5) is constantly urged with an urging member in the other rotary direction of the operating member and along with the rotation in one direction of the operating member the engage-stop portion enters the motion path of the engage-stop portion of the speed change mechanism operating member (4) that moves from radially inside outward of the rotary shaft and engages with the control engage-stop portion of the speed change mechanism operating member (4) that has moved to the radially outer side of the rotary shaft, so that the speed change mechanism connecting portion of the speed change mechanism operating member (4) is made incapable of moving from the radially outer side of the rotary shaft inward; and along with the rotation in the other direction of the operating member the engage-stop portion comes out of the motion path of the engage-stop portion of the speed change mechanism operating member (4) to disengage from the control engage-stop portion of the speed change mechanism operating member, so that the speed change mechanism connecting member of the speed change mechanism operating member (4) is permitted to move from the radially outer side inward of the rotary shaft.

5. A speed change auxiliary device for a bicycle (200) according to claim 4, wherein the engage-stop portion of the control member (5) is formed in a curved shape with its distance from the center of rotation of the operating member gradually increasing in one circumferential direction of the operating member.

6. A speed change auxiliary device for a bicycle (200) according to claim 4,
wherein the control engage-stop portion of the speed change mechanism operating member (4) moves from a radially inner position on the radially inside with respect to the rotary shaft of the speed change mechanism connecting portion to a radially outer position on the radially outside with respect to the rotary shaft as the speed change mechanism connecting portion moves from the radially inner side with respect to the rotary shaft to the radially outer side with respect to the rotary shaft,
the engage-stop portion of the control member (5) is placed in a position distant by a specified distance from the radially inner position toward the radially outer position along the motion path of the control engage-stop portion from the radially inner position to the radially outer position along with the rotation in one direction of the operating member, so that the control engage-stop portion of the speed change mechanism operating member (4) and the engage-stop portion of the control member (5) are engage-stopped at a position distant by a specified distance from the radially outer position of the control engage-stop portion toward the radially inner side.

7. A speed change auxiliary device for a bicycle (200) according to claim 3,
wherein the control member (5) is provided with an elastic force storing means for absorbing and storing an axial force of the rotary shaft exerted from the slope surface contact portion of the speed change mechanism operating member (4) to the operating member.

8. A speed change auxiliary device for a bicycle (200) according to claim 7, wherein the control member (5) is provided with an elastically deformable operating member having an operating portion and an arm for supporting the operating member,
the elastic force storing means is made of the operating member, and
the engage-stop portion is formed on part of the arm.

9. A speed change auxiliary device for a bicycle (200) according to claim 1,
wherein the cam surface (22) of the cam member (2) is provided with a cam surface start point that starts contacting the cam contact portion (42c) of the speed change mechanism operating member (4) that comes to the cam surface contactable point when the cam member (2) rotates in one direction and a cam surface end point that ends contacting the cam contact portion, and
the cam member (2) is further provided, on its cam surface end point side, with a moving means for moving the cam contact portion (42c) of the speed change mechanism operating member (4) from the cam surface contactable position to the cam surface non-contactable position when the cam member (2) rotates in one direction.

10. A speed change auxiliary device for a bicycle (200) according to claim 4,
wherein the speed change mechanism operating member (4) is provided with an operating member body and a movable member capable of moving in the axial direction of the rotary shaft relative to the operating member body, and
the first end of the movable member serves as the cam contacting portion and the second end of the movable member serves as the slope surface contacting portion and the control engage-stop portion.

11. A speed change auxiliary device for a bicycle (200) according to claim 1, wherein the support member (3) is provided with a positioning means for determining the relative position of a front speed change mechanism (210) attached to the bicycle (200).

## Patentansprüche

1. Hilfsvorrichtung einer Gangschaltung für ein Fahrrad (200), die folgendes umfasst:
ein Nockenelement (2) mit einer Nockenlaufbahn (22), das an einem drehbaren Element befestigt ist, das eine an dem Fahrrad (200) vorgesehene drehbare Welle aufweist, und
ein Halterungselement (3), das an dem Rahmen des Fahrrades (200) befestigt ist,
**dadurch gekennzeichnet, dass** die Hilfsvorrichtung der Gangschaltung ferner folgendes umfasst:
ein Betätigungselement (4) für die Gangschalteinrichtung, das für eine gekoppelte Bewegung mit einer an dem Fahrrad (200) befestigten Gangschalteinrichtung (210) verbunden und mit dem Halterungselement (3) so gelagert ist, dass es entlang der Nockenlaufbahn (22) des Nockenelements (2) bewegbar ist, das sich zusammen mit dem drehbaren Element dreht, und mit einem Nockenberührungsteil (42c) versehen ist, der relativ zum Nockenelement (2) über einen Bereich von einem nicht berührbaren Punkt der Nockenlaufbahn, wo das Betätigungselement (4) für die Gangschalteinrichtung die Nockenlaufbahn (22) nicht berühren kann, bis zu einem berührbaren Punkt der Nockenlaufbahn bewegbar ist, wo das Betätigungselement (4) für die Gangschalteinrichtung die Nockenlaufbahn (22) berühren kann, und
ein Steuerelement (5) zum Betätigen des Nockenberührungsteils (42c) des Betätigungselements (4) für die Gangschalteinrichtung, um ihn von dem nicht berührbaren Punkt des Nockens zu dem berührbaren Punkt des Nockens zu bewegen.

2. Hilfsvorrichtung einer Gangschaltung für ein Fahrrad (200) nach Anspruch 1, wobei ein erstes Ende des Betätigungselements (4) für die Gangschalteinrichtung mit einem Gangschalteinrichtungsanschlussteil versehen ist, das mit der Gangschalteinrichtung (210) verbunden ist, und ein zweites Ende des Betätigungselements (4) für die Gangschalteinrichtung durch das Halterungselement (3) drehbar gelagert ist, so dass das Gangschalteinrichtungsanschlussteil entlang der Nockenlaufbahn (22) des Nockenelements (2) von einer radial inneren Stellung bezüglich der drehbaren Welle zu einer radial äußeren Stellung bezüglich der drehbaren Welle bewegbar ist, und
der Nockenberührungsteil (42c) des Betätigungselements (4) für die Gangschalteinrichtung relativ zum Nockenelement (2) in der axialen Richtung der drehbaren Welle von dem nicht berührbaren Punkt der Nockenlaufbahn zu dem berührbaren Punkt der Nockenlaufbahn bewegbar ist.

3. Hilfsvorrichtung einer Gangschaltung für ein Fahrrad (200) nach Anspruch 1 oder 2, wobei ein erstes Ende des Steuerelements (5) mit einem Betätigungselement versehen ist, das eine Auflauffläche (56) aufweist, um den Nockenberührungsteil (42c) des Betätigungselements (4) für die Gangschalteinrichtung von dem nicht berührbaren Punkt des Nockens zu dem berührbaren Punkt des Nockens zu bewegen,
das Betätigungselement (4) für die Gangschalteinrichtung mit einem Auflaufflächenberührungsteil versehen ist, um die Auflauffläche (56) zu berühren, und
der Auflaufflächenberührungsteil des Betätigungselements (4) für die Gangschalteinrichtung veranlasst wird, auf dem Betätigungselement, das die Auflauffläche (56) aufweist zu gleiten und sich von dem nicht berührbaren Punkt des Nockens zu dem berührbaren Punkt des Nockens zusammen mit einer Drehung des Betätigungselements in einer Richtung zu bewegen, wenn das zweite Ende des Steuerelements (5) dazu gebracht wird, sich um das zweite Ende zu drehen.

4. Hilfsvorrichtung einer Gangschaltung für ein Fahrrad (200) nach Anspruch 3, wobei das Betätigungselement (4) für die Gangschalteinrichtung mit einem Steuerungseingriffsanschlagteil versehen ist, um durch Eingriff mit dem Steuerelement angehalten zu werden,
das Steuerelement (5) ferner mit einem Eingriffsanschlagteil versehen ist, um es mit dem Steuerungseingriffsanschlagteil des Betätigungselements für die Gangschalteinrichtung in Eingriff zu bringen oder davon zu lösen,
das Steuerelement (5) fortwährend durch ein antreibendes Element in die andere Drehrichtung des Betätigungselements gedrängt wird und der Eingriffsanschlagteil zusammen mit der Drehung in einer Richtung des Betätigungselements in den Bewegungsweg des Eingriffsanschlagteils des Betätigungselements (4) für die Gangschalteinrichtung eintritt, das sich vom radial Inneren der drehbaren Welle auswärts bewegt und mit dem Steuerungseingriffsanschlagteil des Betätigungselements (4) für die Gangschalteinrichtung in Eingriff kommt, das sich zur radial äußeren Seite der drehbaren Welle bewegt hat, so dass das Gangschalteinrichtungsanschlussteil des Betätigungselements (4) für die Gangschalteinrichtung außerstande gesetzt wird, sich von der radial äußeren Seite der drehbaren Welle nach innen zu bewegen, und das Eingriffsanschlagteil zusammen mit der Drehung in der anderen Richtung des Betätigungselements aus dem Bewegungsweg des Eingriffsanschlagteils des Betätigungselements (4) für die Gangschalteinrichtung herauskommt, um es von dem Steuerungseingriffsanschlagteil des Betätigungselements für die Gangschalteinrichtung zu lösen, so dass dem Gangschalteinrichtungsanschlussteil des Betätigungselements (4) für die Gangschalteinrichtung ermöglicht wird, sich von der radial äußeren Seite der drehbaren Welle nach innen zu bewegen.

5. Hilfsvorrichtung einer Gangschaltung für ein Fahrrad (200) nach Anspruch 4, wobei das Eingriffsanschlagteil des Steuerelements (5) in einer gekrümmten Form ausgebildet ist, wobei sein Abstand von der Drehachse des Betätigungselements in einer Umfangsrichtung des Betätigungselements fortschreitend zunimmt.

6. Hilfsvorrichtung einer Gangschaltung für ein Fahrrad (200) nach Anspruch 4, wobei sich der Steuerungseingriffsanschlagteil des Betätigungselements (4) für die Gangschalteinrichtung von einer radial inneren Stellung an der radialen Innenseite bezüglich der drehbaren Welle des Gangschalteinrichtungsanschlussteils zu einer radial äußeren Stellung an der radialen Außenseite bezüglich der drehbaren Welle bewegt, wenn sich das Gangschalteinrichtungsanschlussteil von der radial inneren Seite bezüglich der drehbaren Welle zu der radial äußeren Seite bezüglich der drehbaren Welle bewegt,
das Eingriffsanschlagteil des Steuerelements (5) in einer Stellung um einen festgelegten Abstand entfernt von der radial inneren Stellung in Richtung der radial äußeren Stellung entlang dem Bewegungsweg des Steuerungseingriffsanschlagteils von der radial inneren Stellung zu der radial äußeren Stellung zusammen mit der Drehung des Betätigungselements in einer Richtung angeordnet wird, so dass der Steuerungseingriffsanschlagteil des Betätigungselements (4) für die Gangschalteinrichtung und das Eingriffsanschlagteil des Steuerelements (5) durch Kontakt in einer Stellung angehalten werden, die um einen festgelegten Abstand von der radial äußeren Stellung des Steuerungseingriffsanschlagteils in Richtung der radial inneren Seite entfernt ist.

7. Hilfsvorrichtung einer Gangschaltung für ein Fahrrad (200) nach Anspruch 3, wobei das Steuerelement (5) mit einem Federkraftspeichermittel ausgerüstet ist, um eine axiale Energie der drehbaren Welle zu absorbieren und zu speichern, die von dem Auflaufflächenberührungsteil des Betätigungselements (4) für die Gangschalteinrichtung auf das Betätigungselement ausgeübt wird.

8. Hilfsvorrichtung einer Gangschaltung für ein Fahrrad (200) nach Anspruch 7, wobei das Steuerelement (5) mit einem elastisch verformbaren Betätigungselement versehen ist, das einen Betätigungsteil und einen Arm zur Halterung des Betätigungselements aufweist, wobei
das Federkraftspeichermittel aus dem Betätigungselement besteht, und das Eingriffsanschlagteil an einem Teil des Arms ausgebildet ist.

9. Hilfsvorrichtung einer Gangschaltung für ein Fahrrad (200) nach Anspruch 1, wobei die Nockenlaufbahn (22) des Nockenelements (2) mit einem Nockenlaufbahnanfangspunkt, an dem der Kontakt mit dem Nockenberührungsteil (42c) des Betätigungselements (4) für die Gangschalteinrichtung beginnt, der zu dem berührbaren Punkt der Nockenlaufbahn kommt, wenn sich das Nockenelement (2) in einer Richtung dreht, und einem Nockenlaufbahnendpunkt versehen ist, an dem der Kontakt mit dem Nockenberührungsteil endet, und
das Nockenelement (2) ferner an seiner Nockenlaufbahnendpunktseite mit einem bewegbaren Mittel versehen ist, um den Nockenberührungsteil (42c) des Betätigungselements (4) für die Gangschalteinrichtung aus der die Nockenlaufbahn berührenden Stellung in die die Nockenlaufbahn nicht berührende Stellung zu bewegen, wenn sich das Nockenelement (2) in einer Richtung dreht.

10. Hilfsvorrichtung einer Gangschaltung für ein Fahrrad (200) nach Anspruch 4, wobei das Betätigungselement (4) für die Gangschalteinrichtung mit einem Betätigungselementhauptteil und einem bewegbaren Element versehen ist, das in der axialen Richtung der drehbaren Welle relativ zu dem Betätigungselementhauptteil bewegbar ist, und
das erste Ende des bewegbaren Elements als der Nockenberührungsteil und das zweite Ende des bewegbaren Elements als der Auflaufflächenberührungsteil und der Steuerungseingriffsanschlagteil dient.

11. Hilfsvorrichtung einer Gangschaltung für ein Fahrrad (200) nach Anspruch 1, wobei das Halterungselement (3) mit einem Positioniermittel zum Bestimmen der relativen Stellung einer vorderen Gangschalteinrichtung (210) versehen ist, die an dem Fahrrad (200) befestigt ist.

## Revendications

1. Dispositif auxiliaire de commande de changement de vitesse pour bicyclette (200), comprenant :
- un élément de came (2) ayant une surface de came (22) fixée à un élément rotatif ayant un arbre rotatif disposé sur la bicyclette (200), et
- un élément support (3) fixé au cadre de la bicyclette (200),
**caractérisé par le fait que** le dispositif auxiliaire de commande de changement de vitesse comprend en outre :
- un élément d'actionnement du mécanisme de changement de vitesse (4) relié, pour créer un mouvement entrecroisé, à un mécanisme de changement de vitesse (210) fixé à la bicyclette (200) et supporté avec l'élément support (3) de manière à être mobile le long de la surface de came (22) de l'élément de came (2) qui tourne conjointement avec l'élément rotatif, et pourvu d'une partie de contact de came (42c) apte à se déplacer par rapport à l'élément de came (2) sur une distance allant d'un point non contactable de la surface de came où l'élément d'actionnement du mécanisme de changement de vitesse (4) ne peut pas venir en contact avec la surface de came (22) à un point contactable de la surface de came où l'élément d'actionnement du mécanisme de changement de vitesse (4) peut entrer en contact avec la surface de came (22), et
- un élément de commande (5) destiné à actionner la partie de contact de la came (42c) de l'élément d'actionnement du mécanisme de changement de vitesse (4) pour la déplacer du point non contactable de la came au point contactable de la came.

2. Dispositif auxiliaire de commande de changement de vitesse pour bicyclette (200) selon la revendication 1, dans lequel
- une première extrémité de l'élément d'actionnement du mécanisme de changement de vitesse (4) est pourvue d'une partie de raccord du mécanisme de changement de vitesse (210) et une seconde extrémité de l'élément d'actionnement du mécanisme de changement de vitesse (4) est supportée rotativement avec l'élément support (3), de telle sorte que la partie de raccord du mécanisme de changement de vitesse est mobile le long de la surface de came (22) de l'élément de came (2) allant d'une position interne radialement par rapport à l'arbre rotatif à une position externe radialement par rapport à l'arbre rotatif, et
- la partie de contact de la came (42c) de l'élément d'actionnement du mécanisme de changement de vitesse (4) est mobile par rapport à l'élément de came (2) du point non contactable de la surface de came au point contactable de la surface de came dans le sens axial de l'arbre rotatif.

3. Dispositif auxiliaire de commande de changement de vitesse pour bicyclette (200) selon la revendication 1 ou 2, dans lequel la première extrémité de l'élément de commande (5) est pourvue d'un élément d'actionnement ayant une surface inclinée (56) destinée à déplacer la partie de contact de la came (42c) de l'élément d'actionnement du mécanisme de changement de vitesse (4) du point non contactable de la came au point contactable de la came,
- l'élément d'actionnement du mécanisme de changement de vitesse (4) est pourvu d'une partie de contact de la surface inclinée pour venir en contact avec la surface inclinée (56), et
- la partie de contact de la surface inclinée de l'élément d'actionnement du mécanisme de changement de vitesse (4) provoque le glissement sur l'élément d'actionnement ayant la surface inclinée (56), et le déplacement du point non contactable de la came en même temps que la rotation dans un sens de l'élément d'actionnement tandis que la seconde extrémité de l'élément de commande (5) peut tourner autour de la seconde extrémité.

4. Dispositif auxiliaire de commande de changement de vitesse pour bicyclette (200) selon la revendication 3, dans lequel
- l'élément d'actionnement du mécanisme de changement de vitesse (4) est pourvu d'une partie d'arrêt de pénétration de commande pour stopper la pénétration dans l'élément de commande,
- l'élément de commande (5) est en outre pourvu d'une partie d'arrêt de pénétration pour pénétrer ou se désengager de la partie d'arrêt de pénétration de commande de l'élément d'actionnement du mécanisme de changement de vitesse,
- l'élément de commande (5) est constamment contraint par un organe de contrainte dans l'autre sens de rotation de l'élément d'actionnement et en même temps que la rotation dans un sens de l'élément d'actionnement de la partie d'arrêt de pénétration entre dans la trajectoire de mouvement de la partie d'arrêt de pénétration de l'élément d'actionnement du mécanisme de changement de vitesse (4) qui est mobile radialement de l'intérieur vers l'extérieur de l'arbre rotatif et pénètre dans la partie d'arrêt de pénétration de commande de l'élément d'actionnement du mécanisme de changement de vitesse (4) qui s'est déplacé sur le côté externe radialement de l'arbre rotatif, de telle sorte que la partie de raccord du mécanisme de changement de vitesse de l'élément d'actionnement du mécanisme de changement de vitesse (4) est empêché de se déplacer du côté externe radialement vers l'intérieur de l'arbre rotatif ; et en même temps que la rotation dans l'autre sens de l'élément d'actionnement la partie d'arrêt de pénétration quitte la trajectoire de mouvement de la partie d'arrêt de pénétration de l'élément d'actionnement du mécanisme de changement de vitesse (4) pour se désengager de la partie d'arrêt de pénétration de commande de l'élément d'actionnement du mécanisme de changement de vitesse, de telle sorte que la partie de raccord du mécanisme de changement de vitesse de l'élément d'actionnement du mécanisme de changement de vitesse (4) est apte à se déplacer du côté externe radialement vers l'intérieur de l'arbre rotatif.

5. Dispositif auxiliaire de commande de changement de vitesse pour bicyclette (200) selon la revendication 4, dans lequel la partie d'arrêt de pénétration de l'élément de commande (5) est de forme incurvée, sa distance à partir du centre de rotation de l'élément d'actionnement augmentant graduellement dans un sens circonférentiel de l'élément d'actionnement.

6. Dispositif auxiliaire de commande de changement de vitesse pour bicyclette (200) selon la revendication 4, dans lequel
- la partie d'arrêt de pénétration de commande de l'élément d'actionnement du mécanisme de changement de vitesse (4) se déplace d'une position interne radialement sur l'intérieur radialement par rapport à l'arbre rotatif de la partie de raccord du mécanisme de changement de vitesse à une position externe radialement sur l'extérieur radialement par rapport à l'arbre rotatif tandis qu'une partie de raccord du mécanisme de changement de vitesse se déplace du côté interne radialement par rapport à l'arbre rotatif au côté externe radialement par rapport à l'arbre rotatif,
- la partie d'arrêt de pénétration de l'élément de commande (5) est placée dans une position à distance spécifiée par rapport à la position externe radialement le long de la trajectoire de mouvement de la partie d'arrêt de pénétration de commande de la position interne radialement à la position externe radialement en même temps que la rotation dans un sens de l'élément d'actionnement, de telle sorte que la pénétration de la partie d'arrêt de pénétration de commande de l'élément d'actionnement du mécanisme de changement de vitesse (4) et de la partie d'arrêt de pénétration de l'élément de commande (5) est stoppée à une position à distance spécifiée par rapport à la position externe radialement de la partie d'arrêt de pénétration de commande vers le côté interne radialement.

7. Dispositif auxiliaire de commande de changement de vitesse pour bicyclette (200) selon la revendication 3, dans lequel l'élément de commande (5) est pourvu d'un moyen de mémorisation de force élastique destiné à absorber et à mémoriser une force axiale de l'arbre rotatif exercée à partir de la partie de contact de la surface inclinée de l'élément d'actionnement du mécanisme de changement de vitesse (4) vers l'élément d'actionnement.

8. Dispositif auxiliaire de commande de changement de vitesse pour bicyclette (200) selon la revendication 7, dans lequel
- l'élément de commande (5) est pourvu d'un élément d'actionnement élastiquement déformable ayant une partie d'actionnement et un bras destiné à supporter l'élément d'actionnement,
- le moyen de mémorisation de force élastique est constitué de l'élément d'actionnement, et la partie d'arrêt de pénétration est formée sur une partie du bras.

9. Dispositif auxiliaire de commande de changement de vitesse pour bicyclette (200) selon la revendication 1, dans lequel
- la surface de came (22) de l'élément de came (2) est pourvue d'un point de départ de la surface de came commençant à entrer en contact avec la partie de contact de la came (42c) de l'élément d'actionnement du mécanisme de changement de vitesse (4) qui vient au point contactable de la surface de came quand l'élément de came (2) tourne dans un sens et d'un point d'extrémité de la surface de came finissant par entrer en contact avec la partie de contact de la came, et
- l'élément de came (2) est en outre pourvu, sur son côté de point d'extrémité de la surface de came, d'un moyen mobile destiné à déplacer la partie de contact de la came (42c) de l'élément d'actionnement du mécanisme de changement de vitesse (4) de la position contactable de la surface de came à la position non contactable de la surface de came quand l'élément de came (2) tourne dans un sens.

10. Dispositif auxiliaire de commande de changement de vitesse pour bicyclette (200) selon la revendication 4, dans lequel
- l'élément d'actionnement du mécanisme de changement de vitesse (4) est pourvu d'un corps d'élément d'actionnement et d'un élément mobile apte à se déplacer dans le sens axial de l'arbre rotatif par rapport au corps d'élément d'actionnement, et
- la première extrémité de l'élément mobile sert de partie de contact de la came et la seconde extrémité de l'élément mobile sert de partie de contact de la surface inclinée et de partie d'arrêt de pénétration de commande.

11. Dispositif auxiliaire de commande de changement de vitesse pour bicyclette (200) selon la revendication 1, dans lequel l'élément support (3) est pourvu d'un moyen de positionnement destiné à déterminer la position relative d'un mécanisme de changement de vitesse avant (210) relié à la bicyclette (200).
